# EUROPÄISCHE PATENTSCHRIFT

(11) **EP 4 681 516 B1**
(45) Veröffentlichungstag und Bekanntmachung des Hinweises auf die Patenterteilung: **28.10.2026**
(21) Anmeldenummer: 25191090.7
(22) Anmeldetag: 22.08.2019
(51) Int. Cl.: A01B 39/08, A01B 79/00, A01M 21/02, G06N 3/09, G06N 3/0464, A01D 46/30, B64U 10/14, B64U 50/19

(54) **MOBILE ANALYSE- UND BEARBEITUNGSVORRICHTUNG**
MOBILE ANALYSIS AND PROCESSING DEVICE
DISPOSITIF MOBILE D'ANALYSE ET DE TRAITEMENT

(30) Priorität: 24.08.2018 DE 102018120753
(43) Veröffentlichungstag der Anmeldung: 21.01.2026
(62) Dokumentnummer(n) der früheren Anmeldung(en) nach Art. 76 EPÜ: 19765970.9 / 3 840 559
(73) Patentinhaber: Westhof Patente GmbH, 25764 Friedrichsgabekoog (DE)
(72) Erfinder: HUSSMANN, Stephan, 25746 Heide (DE); KNOLL, Florian Johannes, 25813 Husum (DE); CZYMMEK, Vitali, 25746 Heide (DE)
(74) Vertreter: patcare Patentanwälte Partnerschaft mbB

(56) Entgegenhaltungen:
- WO-A1-2017/181127
- WO-A1-2018/033925
- CN-A- 108 271 765
- PETERIS EIZENTALS: "Picking System for Automatic Harvesting of Sweet Pepper", 1 September 2016 (2016-09-01), Kochi, Japan, XP055618365, Retrieved from the Internet <URL:http://hdl.handle.net/10173/1417> [retrieved on 20190904]

## Beschreibung

Die Erfindung betrifft eine mobile Analyse- und Bearbeitungsvorrichtung für die Landwirtschaft zur Bearbeitung des Bodens und/oder zur Manipulation von Flora und Fauna nach Anspruch 1 sowie ein Verfahren zur Echtzeit Regelung der Bearbeitung des Bodens und/oder der Manipulation von Flora und Fauna durch die Analyse- und Bearbeitungsvorrichtung gemäß dem Anspruch 16.

Die Unkrautregulierung in der Landwirtschaft ist eine sehr arbeitsintensive Aufgabe, besonders im biologischen Anbau, die den Einsatz von Chemikalien verbietet oder einschränkt. Je nach angebauter Kultur ist die Unkrautregulierung in unmittelbarer Nähe der Nutzpflanze notwendig. Diese Regulierung findet im Allgemeinen im frühen Wachstumszustand statt. Sowohl Nutzpflanze auf der einen Seite als auch Unkraut bzw. Beikraut auf der anderen Seite sind da noch sehr klein und nahe beieinander. Um eine Beschädigung der Nutzpflanze zu vermeiden, ist es zielführend selektive Methoden anzuwenden. Dies erfolgt im biologischen Anbau, zum Beispiel für Möhren, durch eine arbeitsintensive, körperschädigende manuelle Arbeit mit sogenannten *"Jäte-Fliegern".* Saison-Arbeitskräfte liegen auf dem Bauch auf einer Pritsche und entfernen die Unkräuter.

Für Sonderkulturen mit größeren Pflanzenabständen, wie zum Beispiel Zuckerrüben, oder Salat, sind Traktoranbaugeräte bekannt, welche in der Lage sind, einzelne Nutzpflanzen zu erkennen und entsprechende Werkzeuge so anzusteuern, dass die Fläche der Nutzpflanze unbearbeitet bleibt. Für diese Aufgabe ist keine Selektivität notwendig. D.h., dass diese Systeme nicht die zu überarbeitenden Flächen überprüfen, sondern vielmehr das Werkzeug *"auf Blind"* anhand der bekannten Nutzpflanzenposition steuern. Allgemein definiert der Abstand zur Nutzpflanze die Genauigkeitsanforderungen.

Aus der DE 40 39 797 A1 ist eine Vorrichtung zur Unkrautbekämpfung bekannt, wobei ein Aktor zur Vernichtung des Beikrauts permanent läuft und erst, wenn durch einen Sensor eine Kulturpflanze erkannt wird, dieser kurzzeitig unterbrochen wird.

Aus der DE 10 2015 209 879 A1 ist eine Vorrichtung zur Beschädigung von Beikraut bekannt, welches ein Bearbeitungswerkzeug aufweist. Dieses Bearbeitungswerkzeug dient dazu, das Beikraut zu beschädigen. Zudem ist eine Klassifizierungseinheit vorgesehen, welche die Positionsdaten des Beikrauts entweder aufweist oder das Beikraut erkennt und die Positionsdaten ermittelt. Eine Lokalisierungseinheit ermittelt eine Relativposition zwischen dem Bearbeitungswerkzeug und dem Beikraut. Eine Manipulatoreinheit in Form eines Wagens positioniert das Bearbeitungswerkzeug in Abhängigkeit der ermittelten Relativpositionen entsprechend.

Ein entsprechendes Gerät mit einer Druckfördereinheit und einer Flüssigkeitsabgabeeinheit ist aus der DE 10 2015 209 891 A1 bekannt. Bei dieser Ausführungsform wird das Beikraut durch Aufsprühen von Flüssigkeit unter Druck vernichtet.

Aus der DE 10 2015 209 888 A1 ist es bekannt, die Flüssigkeit impulsmäßig auf das Beikraut aufzubringen und somit dieses zu beschädigen.

In der DE 10 2013 222 776 A1 wird ein in einem Wagen gelagerter Stempel offenbart, der in einer Führungseinrichtung zur Führung des Stempels angeordnet ist. Hierbei wird der Stempel auf das Beikraut aufgesetzt und mit Druck beaufschlagt. Über den Druck beaufschlagt wird das Beikraut vernichtet.

Mit Agrarrobotern und Erntemaschinen, die automatisiert und mit Telematik Einrichtung versehen die Landwirtschaft technisch unterstützen, werden derzeit neue Wege beschritten. Vielfach können technische Prinzipien und Erkenntnisse aus der Raumfahrt, der Fernerkundung und der Robotik für die Fragestellungen in der Landwirtschaft übernommen werden, jedoch sind diese an die Aufgabenstellungen in der Landwirtschaft gezielt anzupassen und erfordern neue Vorrichtungen und Verfahren.

Ein Problem bei der automatisierten Behandlung der Felder ist auch das Ermitteln der Daten, wo sich das Beikraut befindet und was demgegenüber als Nutzpflanze zu behandeln ist.

Aus der DE 10 2005 050 302 A1 ist ein Verfahren zum berührungslosen Ermitteln des aktuellen Ernährungszustandes eines Pflanzenbestandes und zum Verarbeiten dieser Information unter Berücksichtigung weiterer Parameter wie Fruchtart und/oder Sorte und/oder Entwicklungsstadium und/oder Ertragsziel in eine Düngeempfehlung bekannt, bei dem von einem Teil des Pflanzenbestandes mindestens ein digitales Bild mittels eines Bildaufnahmesystems in mindestens zwei spektralen Kanälen aufgenommen, aus dem Bild der aktuelle Ernährungszustand durch eine Bildanalyse ermittelt und aus letzterer die Düngeempfehlung abgeleitet wird. Dieser bekannte Stand der Technik hat den Nachteil, dass die Datenverarbeitung relativ lange dauert und für ein in situ System nicht geeignet ist.

In der DE 10 2006 009 753 B3 ist weiterhin ein Verfahren zum berührungslosen Bestimmen der Biomasse und morphologischen Parameter von Pflanzenbeständen beschrieben, bei dem auf die Pflanzen des Bestandes mit einer von auf einem mobilen Träger befestigten Ultraschallquelle emittierten Schallfeld während der Überfahrt eingewirkt, die von den Pflanzen und den Boden reflektierten Schallechos durch einen am Träger fixierten Empfänger erfasst und von diesem nach Wandlung in digitale Signale an eine Auswerte- und Signalverarbeitungseinheit weitergegeben werden, die die Signale aktuell auswertet, auf einem Datenträger speichert und auf einem Monitor anzeigt, wobei optional in einer elektronisch gesteuerten Ausbringeinheit die Signale zu Steuerbefehlen zum Ausbringen von Produktmitteln verarbeitet werden. Dieser Stand der Technik ermöglicht es zwar, morphologische Parameter wie die Anzahl der Blattetagen, die Blattstellung und die vertikale Verteilung der Biomasse direkt zu bestimmen, jedoch ist eine Bestimmung des Beikrauts damit nicht möglich.

Aus der CN 108 271 765 A ist eine gattungsgemäße mobile Analyse- und Bearbeitungsvorrichtung bekannt. Hier wird nur der "Tone Vector" (Farbwinkel H) zur Segmentierung verwendet. Die Datenlast für eine Echtzeitbearbeitung ist bei dieser Ausführung zu hoch.

Der Erfindung liegt die Aufgabe zugrunde, eine mobile Analyse- und Bearbeitungsvorrichtung für die Landwirtschaft zur Bearbeitung des Bodens und/oder zur Manipulation von Flora und Fauna sowie ein Verfahren für die Analyse- und Bearbeitungsvorrichtung zur Verfügung zu stellen, welche eine in Echtzeit geregelte, qualifizierte Beseitigung der detektierten Flora und/oder Fauna sowie auch eine parallele Analyse von Flora und Fauna ermöglicht. Echtzeit bedeutet in diesem Zusammenhang, dass eine in situ Analyse und Bearbeitung ermöglicht wird. Vorzugsweise soll die Vorrichtung mit unterschiedlichen Trägern verbindbar sein, welche die Vorrichtung zum Einsatzort und über den Einsatzort bewegen.

Diese Aufgabe wird für die mobile Analyse- und Bearbeitungsvorrichtung durch die Merkmale des Anspruches 1 und für das Verfahren durch die Merkmale des Anspruches 16 gelöst.

Die Unteransprüche bilden vorteilhafte Weiterbildungen der Erfindung.

Der Erfindung liegt die Erkenntnis zugrunde, dass durch eine Ausbildung einer mobilen Analyse- und Bearbeitungsvorrichtung mit einer visuellen Detektionseinheit, welche eine Reduktion der auszuwertenden Daten auf die notwendigen Bereiche ermöglicht, die Analyse- und Bewertungszeit sich erheblich verkürzen lässt und sich dadurch eine Analyse und Bearbeitung, beispielsweise von landwirtschaftlichen Flächen, in nur einem Arbeitsgang erledigen lässt.

Die Erfindung betrifft daher eine mobile Analyse- und Bearbeitungsvorrichtung für die Landwirtschaft zur Bearbeitung des Bodens und/oder zur Manipulation von Flora und Fauna. Die Vorrichtung umfasst zumindest einen Sensor, eine Werkzeugeinheit mit zumindest einem motorisch angetriebenen Werkzeug, einen Aktor zum Verfahren zumindest des Werkzeugs der Werkzeugeinheit, einen Motor zum Antreiben der Werkzeugeinheit und/oder des Aktors, eine Datenbank, eine erste Kommunikationseinheit mit Schnittstelle und einen ersten Rechner zum Steuern des Sensors, der Werkzeugeinheit und/oder des Aktors aufgrund generierter Steuerbefehle. Dabei werden die über den Sensor erfassten Daten mit den in der Datenbank hinterlegten Daten fortlaufend abgeglichen, um entsprechende Steuersignale für den Sensor, die Werkzeugeinheit und/oder den Aktor zu generieren. Durch diese Vorrichtung wird eine Mobilität und Flexibilität geschaffen, gemäß der die Vorrichtung eine Einheit bildet, mit der sämtliche Daten in Echtzeit abgearbeitet, Steuersignale für den Sensor, die Werkzeugeinheit und/oder den Aktor generiert und umgehend gemäß den Steuersignalen abgearbeitet werden kann. Hierdurch ergeben sich Möglichkeiten der Kombination beispielsweise mit verschiedenen Trägern, welche die Vorrichtung bedarfsweise über das Feld bewegen.

Diese mobile Vorrichtung ist mit einer visuellen Detektionseinheit versehen, welche eine Kamera umfasst, mit der Bilder erfasst werden. Zudem ist eine Segmentierungs- und Datenreduzierungseinrichtung vorgesehen, die so konfigurert ist, dass diese jeweils ein von der Kamera erfasstes Bild aus mehreren Pixeln in einem RGB (Red, Green, Blue) Farbmodell erzeugt. Anschließend wird jeder Pixel basierend auf dem RGB-Farbmodell in ein HSV (hue, saturation, value) Farbmodell überführt. Aus den binären Informationen der einzelnen Pixel wird ein Zwischenbild erzeugt. Ein Klassifikator ist vorgesehen und dabei so konfiguriert, dass dieser auf Basis eines von der Segmentierung- und Datenreduzierungseinrichtung erzeugten Zwischenbildes oder Zwischendaten die Klassifikation übernimmt. Erfindungsgemäß wird jedes Pixel basierend auf dem HSV-Farbmodell dann im Hinblick auf die Farbsättigung (saturation) anhand eines Schwellenwertes bewertet, wobei, wenn der Wert der Farbsättigung einen Schwellenwert übersteigt, der Pixel dem binären Wert"*1*" zugeordnet wird, und, wenn der Wert der Farbsättigung einen Schwellenwert unterschreitet, der Pixel dem binären Wert *"O"* zugeordnet wird. Parallel wird jeder Pixel basierend auf dem HSV-Farbmodell im Hinblick auf den Farbwinkel (hue) anhand eines vorbestimmten Bereiches bewertet, wobei, wenn der Farbwinkel in dem vorbestimmten Bereich liegt, das Pixel dem binären Wert *"1"* zugeordnet wird, und, wenn der Farbwinkel außerhalb des Bereichs liegt, das Pixel dem binären Wert *"O"* zugeordnet wird. Aus den binären Informationen des Farbwinkels und der Farbsättigung entsteht dann das erste Zwischenbild, welches erheblich weniger Daten als das von der Kamera erzeugte Bild enthält. Anschließend werden Pixelfelder aus dem Zwischenbild erzeugt. Weiterhin ist der Klassifikator so konfiguriert , dass dieser auf Basis des von der Segmentierungs- und Datenreduzierungseinrichtung erzeugten Zwischenbildes oder Zwischendaten die Klassifikation mehrerer aus Pixeln bestehender Pixelfelder übernimmt, wobei nur diejenigen Pixelfelder klassifiziert werden, welche zumindest ein Pixel aufweisen, das dem binären Wert *"1"* zugeordnet ist. Auf diese Weise erfolgt eine nicht unerhebliche Datenreduktion und somit Beschleunigung der Analyse vor Ort. Zudem ergeben sich weitere Möglichkeiten der Optimierung, wie sich aus dem Folgenden ergibt.

Vorzugsweise erfolgt der Datenabgleich der durch den Sensor ermittelten Daten mit der Datenbank in Echtzeit, insbesondere mit einer Verifikation und Klassifikation der durch den Sensor ermittelten Daten. Dies erhöht die Reaktionsfähigkeit der Vorrichtung.

Gemäß einer Ausführungsform der Erfindung ist der Sensor eine visuelle Detektionseinheit mit einer Kamera. Die zu verarbeitenden Daten sind somit Bilddaten, welche ohne weiteres mit einer Datenbank abgeglichen werden können.

Um die Vorrichtung bedarfsweise mit einem Träger verbinden zu können, welche die Analyse- und Bearbeitungsvorrichtung bewegt, sind entsprechende Mittel zum Verbinden mit dem Träger vorgesehen.

Um einzelne Komponenten einfach austauschen zu können und somit die Rüstzeiten zu verringern, ist die Analyse- und Bearbeitungsvorrichtung zweigeteilt ausgebildet. Hierbei ist in einer ersten Einheit der Sensor, die Werkzeugeinheit, der Motor zum Antreiben des Werkzeugs der Werkzeugeinheit und/oder des Aktors, der Aktor, der erste Rechner und die erste Kommunikationseinheit mit Schnittstelle vorgesehen. In der zweiten Einheit sind die Datenbank, ein zweiter Rechner und eine zweite Kommunikationseinheit mit Schnittstelle vorgesehen. Die erste Einheit und die zweite Einheit sind über die Schnittstelle zum Datenaustausch miteinander verbindbar. Zudem ist es durch die Zweiteilung auch möglich, dass die beiden Einheiten räumlich getrennt voneinander angeordnet werden können. Dies ist beispielsweise dann von Vorteil, wenn das Gewicht der bewegten Teile der Analyse- und Bearbeitungsvorrichtung möglichst gering sein soll. In diesem Fall könnte die zweite Einheit zentral fix angeordnet werden und die erste Einheit auf dem Feld bewegt werden.

Hierbei ist es günstig, wenn die erste Einheit ein erstes Gehäuse und die zweite Einheit ein zweites Gehäuse umfasst, welches die in den Einheiten vorgesehenen Aggregate vor äußeren Einflüssen schützt.

Das erste und das zweite Gehäuse können über eine Steckverbindung lösbar miteinander verbunden sein. Hierdurch ist ein modulartiges Zusammenfügen der beiden Einheiten, aber auch ein Austausch bei Ausfall einer Einheit, ohne weiteres möglich.

Gemäß einer Ausführungsform der Erfindung weist das erste und das zweite Gehäuse als Mittel für das bedarfsweise Verbinden mit dem Träger Aufnahmen auf, welche entsprechenden Haltemitteln des Trägers zugeordnet sind, über welche die Vorrichtung durch den Träger ergriffen und bewegt werden kann. Alternativ oder zusätzlich kann das erste und das zweite Gehäuse als Mittel für das bedarfsweise Verbinden mit dem Träger Kupplungsmittel aufweisen, welche entsprechenden Kupplungsmittel des Trägers zugeordnet sind, über welche die Vorrichtung mit dem Träger verbunden und bewegt werden kann. Ein einfaches und schnelles Verbinden mit einem Träger zum Transport der Vorrichtung wird hierdurch ermöglicht.

Die Werkzeugeinheit weist vorzugsweise mindestens eine Vorschubeinheit und eine Rotationseinheit auf, welche mit dem Motor zusammenwirkt. Der Einsatzbereich des Werkzeugs wird hierdurch auf einfache Weise erweitert, ohne dass die Vorrichtung bewegt werden muss.

Vorzugsweise ist die Rotationseinheit an einem distalen Ende mit zumindest dem einen Werkzeug versehen, insbesondere mit einer Fräse oder mit einer Messereinheit. Mit Rotation beispielsweise der Messereinheit können zum Beispiel kleine Kerbtiere oder Beikraut selektiv zerstört werden.

Um das Gewicht der Vorrichtung weiter zu reduzieren, ist ein Spannungsanschluss für eine externe Spannungsversorgung vorgesehen. Dabei kann der Spannungsanschluss an der ersten Einheit vorgesehen sein. Im zusammengebauten Zustand von erster Einheit und zweiter Einheit kann die zweite Einheit über diesen Spannungsanschluss die erste Einheit als auch die zweite Einheit mit Spannung versorgen. Vorzugsweise wird dabei die Spannungsquelle eines Trägers zur Spannungsversorgung genutzt.

Um einen Datenaustausch zwischen einem Träger und der Vorrichtung zu ermöglichen ist eine weitere Kommunikationsschnittstelle an der Vorrichtung für den Träger vorgesehen.

Die weitere Kommunikationsschnittstelle kann sowohl in der ersten als auch in der zweiten Einheit angeordnet sein. Bevorzugt ist diese in der zweiten Einheit vorgesehen.

Die oben erwähnte Aufgabe wird auch durch ein Verfahren zur Echtzeitregelung der Bearbeitung des Bodens und/oder der Manipulation von Flora und Fauna durch die Vorrichtung gemäß der eben genannten Art gelöst, wobei das Verfahren folgende Schritte aufweist:
a. zeitlich kontinuierliche Aufnahme datentechnisch definierter Voxel und/oder Pixel und/oder Bilder durch den Sensor;
b. Übermittlung der Aufnahmedaten an die Datenbank;
c. Speicherung der Aufnahmedaten in der Datenbank;
d. qualitativer Datenabgleich der Aufnahmedaten mit den in der Datenbank hinterlegten Daten, vorzugsweise mit Durchführung einer Segmentierung, einer Datenreduktion und/oder einer Verifikation der Aufnahmedaten durch den Rechner;
e. Bewertung der abgeglichenen Daten mit bestehenden definierten Datensätzen in der Datenbank durch einen Klassifikator in Verbindung mit dem Rechner;
f. Verarbeitung und Umsetzung der Bewertung durch den Rechner in regelungs- und/oder steuerungstechnische Daten für den Motor, den Aktor, die Werkzeugeinheit und/oder einem zugeordneten Träger.

Dabei werden, um die Analyse der Aufnahmedaten zu beschleunigen, während des Datenabgleichs die Aufnahmedaten an die Segmentierungs- und Datenreduzierungseinrichtung übermittelt, welche Zwischenbilder erzeugt. Die Zwischenbilder weisen deutlich reduzierte Daten auf.

Weiterhin werden in der Segmentierungs- und Datenreduzierungseinrichtung zur Erzeugung des Zwischenbildes/der Zwischenbilder nacheinander folgende Schritte durchgeführt:
a. jedes von der Kamera aufgenommene Bild wird in Form einer Vielzahl von Pixeln in einem RGB-Farbmodell (Rot, Grün und Blau) erzeugt,
b. jeder Pixel basierend auf dem RGB-Farbmodell (Rot, Grün, Blau) wird in ein HSV (hue, saturation, value)-Farbmodell transferiert,
c. jedes Pixels basierend auf dem HSV-Farbmodells wird im Hinblick auf die Farbsättigung (saturation) anhand eines Schwellenwertes bewertet, wobei, wenn der Wert der Farbsättigung einen Schwellenwert übersteigt, dass Pixel dem binären Wert *"1"* zugeordnet wird, und wenn der Wert der Farbsättigung einen Schwellenwert unterschreitet, der Pixel dem binären Wert *"0"* zugeordnet wird,
d. parallel zu dem ebengenannten Schritt wird jeder Pixel basierend auf dem HSV-Farbmodell im Hinblick auf den Farbwinkel (hue) anhand eines vorbestimmten Bereiches bewertet, wobei wenn der Farbwinkel in dem vorbestimmten Bereich liegt, das Pixel dem binären Wert *"1"* zugeordnet wird, und wenn der Farbwinkel außerhalb des Bereichs liegt, das Pixel dem binären Wert *"0"* zugeordnet wird,
e. aus den binären Informationen des Farbwinkels und der Farbsättigung der einzelnen Pixel wird ein Zwischenbild erzeugt, welches erheblich weniger Daten als das von der Kamera erzeugte Bild enthält.

Die Klassifizierung erfolgt durch einen Klassifikator erfolgt, der auf Basis eines von der Segmentierung- und Datenreduzierungseinrichtung erzeugten Zwischenbildes oder Zwischendaten die Klassifikation mehrerer aus Pixeln bestehender Pixelfelder übernimmt.

Dabei werden nur diejenigen Pixelfelder klassifiziert, die mindestens ein Pixel haben, dem der Binärwert *"1"* zugeordnet ist.

Vorzugsweise erfolgt nach Vorliegen der regelungs- und/oder steuerungstechnischen Daten ein Anfahren des Motors, des Aktors, der Werkzeugeinheit und/oder eines zugeordneten Trägers zur Bearbeitung des Bodens und/oder zur Manipulation von Flora und Fauna.

Nach dem Erzeugen der Zwischenbilder werden diese an den Klassifikator übermittelt, welcher die erzeugten Zwischenbilder anhand bestehender definierter Bilder und Datensätze in der Datenbank im Zusammenwirken mit dem Rechner bewertet.

Um später die durch die Bewertung ermittelten Ergebnisse aus den Bildern in regelungs- und/oder steuerungstechnische Daten für den Akteur und/oder den Träger umsetzen zu können, versieht die Segmentierungs- und Datenreduktionseinrichtung die Pixel mit Lagekoordinaten.

Gemäß einer Ausführungsform der Erfindung nimmt der Klassifikator mit Hilfe eines künstlichen neuronalen Netzes die Klassifikation vor. Vorzugsweise ist dabei das künstliche neuronale Netz durch ein Convolutional Neural Network (CNN) gebildet.

Gemäß einem bevorzugten Verfahren nach der Erfindung wird die Bewertung in einem mit dem Klassifikator zusammenwirkenden Rechner, insbesondere in dem zweiten Rechner, und die Verarbeitung und Umsetzung der Bewertung in regelungs- und/oder steuerungstechnische Daten in einem anderen Rechner, insbesondere in dem ersten Rechner durchgeführt, wofür die Bewertung von dem einen Rechner an den anderen Rechner übermittelt wird. Hierdurch wird die Rechenzeit reduziert, da Rechner parallel arbeiten können. Zudem ergibt sich die Möglichkeit, dass die beiden Rechner nicht zwingend beieinander angeordnet sein müssen. Beispielsweise kann der zweite Rechner mit der zweiten Einheit entfernt von der ersten Einheit mit dem ersten Rechner angeordnet sein.

Die Speicherung, der qualitative Datenabgleich der Aufnahmedaten mit in der Datenbank hinterlegten Daten und/oder die Bewertung durch den Klassifikator werden vorzugsweise durch Künstliche Intelligenz unterstützt. Hierdurch kann ein nahezu autonom arbeitendes System geschaffen werden.

Die Vorrichtung, insbesondere die erste Einheit und die zweite Einheit, können modular ausgebildet sein, sodass diese miteinander verbunden aber auch mit anderen Einheiten eines Gesamtsystems verbunden werden können.

Unter Echtzeit wird die Möglichkeit verstanden, Analyse- und Bearbeitungsvorgänge in einem Arbeitsgang in situ durchführen zu können.

Unter einem Voxel wird im Zusammenhang mit der Erfindung ein räumlicher Datensatz verstanden, der über den Sensor bzw. eine visuelle Detektionseinheit in einem bildgebenden Verfahren, diskret oder zeitlich kontinuierlich generiert wird.

Der Aktor weist bevorzugt eine Mechanik auf, insbesondere eine Dreheinheit, die sich in einer Halterung in dem Gehäuse der ersten Einheit befindet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Darstellung eines Tragsystems mit räumlich getrennten Gehäusen einer mobilen Vorrichtung gemäß einer ersten Ausführungsform der Erfindung;
- Fig. 2: eine schematische Darstellung eines Tragsystems mit räumlich getrennten Gehäusen einer mobilen Vorrichtung, die über eine Steckverbindung miteinander verbunden sind, gemäß einer zweiten Ausführungsform der Erfindung;
- Fig. 3: eine Seitenansicht auf das Tragsystem gemäß der ersten Ausführungsform der Erfindung mit Anbindung der mobilen Vorrichtung an eine Flugdrohne;
- Fig. 4: ein Flussdiagramm, welches die Schritte eines Verfahrens mit dem Tragsystem veranschaulicht;
- Fig. 5: ein Flussdiagramm, welches die Schritte des Verfahrens zur Ermittlung der notwendigen Maßnahmen darstellt;
- Fig. 6: ein durch die visuelle Detektionseinheit aufgenommenes Bild;
- Fig. 7: ein schematischer Aufbau eines Convolution Neuronalen Netzwerkes ausgehend von dem Bild von Fig. 6;
- Fig. 8: ein Flussdiagramm, welches ein Verfahren der Segmentierungs- und Datenreduktionseinheit zeigt;
- Fig. 9: ein aus der Segmentierungs- und Datenreduktionseinheit erstelltes Zwischenbild;
- Fig. 10: einen Teilausschnitt des Zwischenbildes mit drei unterschiedlichen Fällen für den Klassifikator;
- Fig. 11: zwei prinzipielle Darstellungen von weiteren Pixelfeldern für die Bewertung durch den Klassifikator;
- Fig. 12: zwei prinzipielle Darstellungen von weiteren Pixelfeldern für die Bewertung durch den Klassifikator;
- Fig. 13: ein durch den Klassifikator erstelltes und bewertetes Bild, und
- Fig. 14: eine prinzipielle Darstellung der Arbeitsweise des Klassifikators.

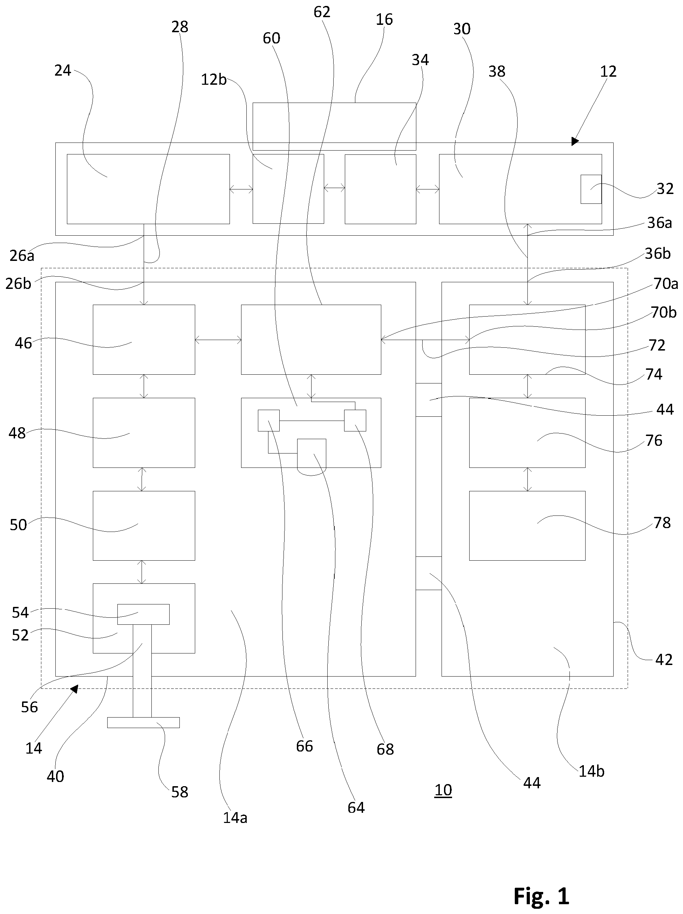

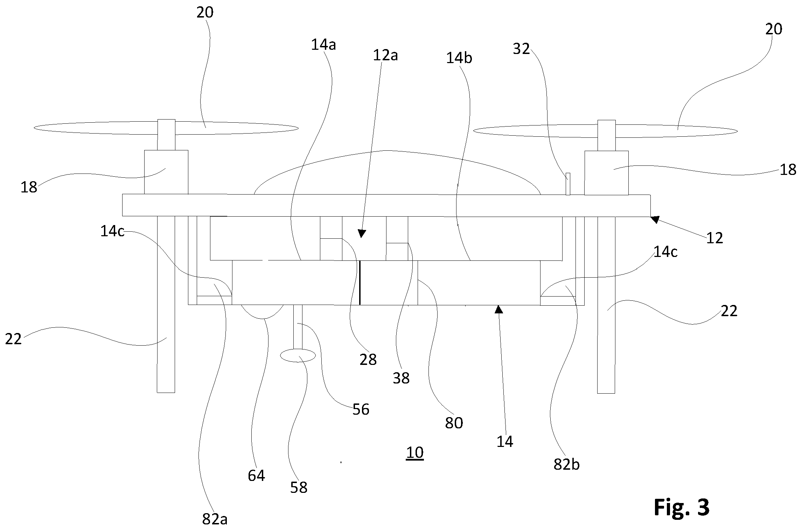

In Fig. 1 ist schematisch ein Trägersystem 10 dargestellt, welches aus einem Träger in Form einer Flugdrohne 12 und einer mobilen Vorrichtung 14 zur Bearbeitung des Bodens und zur Manipulation der Flora und Fauna in der Landwirtschaft besteht. Die Flugdrohne 12 umfasst einen Antrieb 16, der vier Elektromotoren 18 und über diese angetriebene Propeller 20 umfasst, siehe Figur 3. Zudem ist die Flugdrohne 12 mit 4 Füßen 22 unterhalb der Elektromotoren 18 versehen.

Gemäß der ersten Ausführungsform der Erfindung umfasst die Flugdrohne 12 eine Energiequelle in Form von Batterien 24, welche die Energieversorgung für den Antrieb 16 als auch für die weiteren Aggregate der Flugdrohne 12 sowie die mobile Vorrichtung 14 liefert. Hierfür ist eine Spannungsschnittstelle 26a an der Flugdrohne 12 und eine zu dieser Spannungsschnittstelle 26a korrespondierende Spannungsschnittstelle 26b an der mobilen Vorrichtung 14 vorgesehen, welche über eine lösbare Steckverbindung 28 miteinander verbunden sind. Zudem ist eine Kommunikationseinheit 30 mit einer Antenne 32 und eine GPS-Einheit 34 vorgesehen, welche fortlaufend den Standort der Flugdrohne 12 ermittelt, diese Standortdaten der Flugdrohne 12 an die mobile Vorrichtung 14 für die Zuordnung zu den von der mobilen Vorrichtung 14 erfassten Daten sowie an eine entfernt gelegene zentrale Recheneinheit übermittelt, die hier nicht näher dargestellt ist. Mithilfe der GPS-Einheit 34, der Kommunikationseinheit 30 und der mobilen Vorrichtung 14 kann Telemetrie durchgeführt werden. Zudem ist eine Steuereinrichtung 12b vorgesehen, welche den Antrieb 16 steuert.

Die Kommunikationseinheit 30 der Flugdrohne 12 umfasst neben der Antenne 32 eine weitere Schnittstelle 36a, welche einer zugeordneten Schnittstelle 36b der mobilen Vorrichtung 14 zugeordnet ist und über eine lösbare Steckverbindung 38 zum Datenaustausch hierüber miteinander verbunden sind.

Die mobile Vorrichtung 14 besteht aus zwei Einheiten 14a, 14b, nämlich einer ersten Einheit 14a mit einem ersten Gehäuse 40 und einer zweiten Einheit 14b mit einem zweiten Gehäuse 42. Das erste Gehäuse 40 und das zweite Gehäuse 42 sind lösbar über eine Steckverbindung 44 miteinander zu einer die mobile Vorrichtung 14 bildenden Einheit verbunden. Es gibt einen Satz unterschiedliche erste Einheiten 14a auf der einen Seite und einen Satz unterschiedlicher zweite Einheiten 14b auf der anderen Seite, welche durch einfaches miteinander verbinden individuell konfiguriert und an die Bedürfnisse angepasst werden können.

In dem ersten Gehäuse 40 ist ein erster Rechner 46, ein Aktor in Form eines beweglichen, motorisch angetriebenen Arms 48, ein mit dem Arm 48 zusammenwirkender Motor 50, ein an dem Arm 48 angeordnete Werkzeugeinheit 52, welche eine Vorschubeinheit 54 und eine Rotationseinheit 56 aufweist. An dem distalen Ende der Rotationseinheit 56 ist eine Fräse 58 als Werkzeug vorgesehen. Der Motor 50 treibt sowohl den Arm 48 als auch die Vorschubeinheit 54, die Rotationseinheit 56 und damit auch die Fräse 58 an. Der Arm 48 kann mehrteilig ausgebildet sein und über verschiedene Gelenke verfügen, welche im Einzelnen nicht dargestellt sind, da derartige motorisch betriebene Kinematiken bekannt sind. Über den Arm 48 wird die Werkzeugeinheit 52 relativ zur Flugdrohne 12 zu ihrem Einsatzbereich bewegt, so dass die Werkzeugeinheit 52 mit der Vorschubeinheit 54 und der Rotationseinheit 56 die Fräse 58 zur Bearbeitung der Pflanzen, beispielsweise Entfernen von Beikraut, und/oder zum Bearbeiten des Bodens einsetzen kann.

Weiterhin ist in der ersten Einheit 14a eine Kommunikationseinheit 60 und eine visuelle Detektionseinheit 62 vorgesehen. Die visuelle Detektionseinheit 62 umfasst eine Kamera 64, mit der Bilder erfasst werden, eine Segmentierungs- und Datenreduktionseinrichtung 66, einen Klassifikator 68, der auf Basis eines von der Segmentierung- und Datenreduzierungseinrichtung 66 erzeugten Zwischenbildes oder Zwischendaten die Klassifikation mehrerer aus Pixeln bestehender Pixelfelder übernimmt, wie weiter unten noch näher beschrieben wird. Die visuelle Detektionseinheit 62 ist mit der Kommunikationseinheit 60 verbunden.

Die erste Einheit 14a weist eine Schnittstelle 70a auf, welche einer Schnittstelle 70b der zweiten Einheit 14b zugeordnet ist. Über eine Kommunikationsverbindung 72 ist die Kommunikationseinheit 60 über die Schnittstelle 70a mit der Schnittstelle 70b und darüber mit einer Kommunikationseinheit 74 in der zweiten Einheit 14b verbunden. Die Kommunikationseinheit 74 der zweiten Einheit 14b ist über die Schnittstelle 36b über die Steckverbindung 38 mit der Schnittstelle 36a und der Kommunikationseinheit 30 der Flugdrohne 12 verbunden.

In der zweiten Einheit 14b sind zudem ein zweiter Rechner 76 und eine Datenbank 78 vorgesehen.

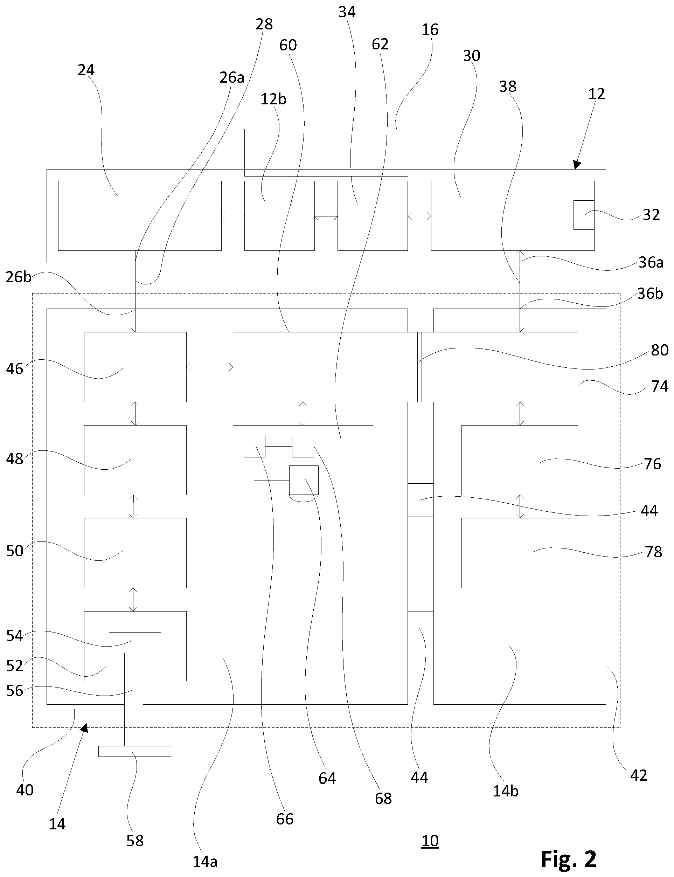

In der Fig. 2 ist eine weitere Ausführungsform des Trägersystems 10 dargestellt, wobei die Flugdrohne 12 identisch mit der ersten Ausführungsform ausgebildet ist. Lediglich die mobile Vorrichtung 14 unterscheidet sich durch eine Steckverbindung 80 zwischen der ersten Einheit 14a und der zweiten Einheit 14b, welche zudem auch die Kommunikationseinheit 60 der ersten Einheit 14a mit der Kommunikationseinheit 74 lösbar verbindet. Durch einfaches Zusammenstecken können unterschiedliche erste Einheiten 14a mit unterschiedlichen zweiten Einheiten 14b kombiniert und zu einer mobilen Einheit 14 zusammengefügt werden.

In Fig. 3 ist die Flugdrohne 12 in Seitenansicht dargestellt, wobei dadurch lediglich zwei von vier Elektromotoren 18 mit zugeordneten Propellern 20 sichtbar sind. Unterhalb der Elektromotoren 18 sind jeweils die Füße 22 angeordnet. Zwischen den Füßen 22 sind zwei Greifarme 82a, 82b vorgesehen, welche die mobile Vorrichtung 14 bedarfsweise ergreifen und anheben und wieder absetzen und ablegen. Die mobile Vorrichtung 14 besteht aus den beiden Einheiten 14a und 14b, welche über die Steckverbindung 80 miteinander lösbar verbunden sind. In der ersten Einheit 14a ist die Kamera 64 als Teil der visuellen Detektionseinheit 62 sowie die Fräse 58 an dem distalen Ende der Rotationseinheit 56 erkennbar.

Die mobile Vorrichtung 14 kann auch mit mehreren unterschiedlichen Werkzeugeinheiten 52 ausgerüstet sein, welche mit einem gemeinsamen Arm 48 und beispielsweise einen Werkzeugrevolver versehen ist, der die benötigte Werkzeugeinheit 52 in die Aktivierungsposition bringt. Denkbar ist aber auch, dass die unterschiedlichen Werkzeugeinheiten jeweils einen eigenen Aktor aufweisen.

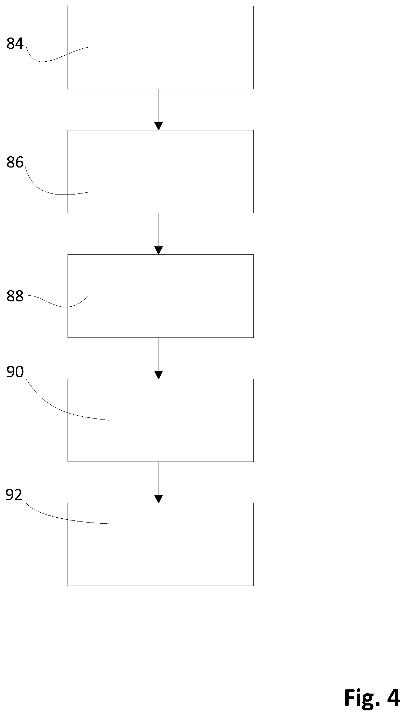

In Fig. 4 sind in einem Flussdiagramm die Schritte aufgezeigt, welche nacheinander durchlaufen werden, um mit dem Trägersystem 10 eine Bearbeitung des Bodens und die Manipulation von Flora und Fauna in der Landwirtschaft durchzuführen.

In einem ersten Schritt 84 werden zunächst mit dem Trägersystem 10 die notwendigen Maßnahmen auf der zugeordneten landwirtschaftlichen Fläche ermittelt. Beispielsweise wird hierfür das Trägersystem 10 zu einer zu bearbeitenden landwirtschaftlichen Fläche, beispielsweise zu einem landwirtschaftlichen Feld, gebracht oder direkt von einem zentralen Ort aus dorthin geflogen. Die Flugdrohne 12 mit der mobilen Vorrichtung 14 startet und fliegt das landwirtschaftliche Feld ab. Über eine ortsfeste zentrale Recheneinheit erhält das Trägersystem 10 die notwendigen Daten über das zu begutachtende landwirtschaftliche Feld. Die zentrale Recheneinheit kann hierbei auch ein Smartphone sein. Über die visuelle Detektionseinheit 62 mit der Kamera 64 der mobilen Vorrichtung 14 wird das landwirtschaftliche Feld in Bildern erfasst. Die Bilder werden ausgewertet und mit einem Abgleich in der Datenbank 78 die notwendigen Maßnahmen für dieses landwirtschaftliche Feld schlussendlich ermittelt.

In einem nächsten Schritt 86 wird auf Grundlage der ermittelten Maßnahmen für das landwirtschaftliche Feld oder für Teilbereiche des landwirtschaftlichen Feldes aus einem Satz erster Einheiten 14a und einem Satz unterschiedlicher zweiter Einheiten 14b die für die notwendige Maßnahme geeignete mobile Einheit 14 zusammengestellt und die beiden Einheiten 14a, 14b miteinander verbunden.

In einem nächsten Schritt 88 wird die mobile Vorrichtung 14 mit der Flugdrohne 12 über den Greifarm 82a und den Greifarm 82b jeweils seitlich ergriffen und durch diesen in Richtung Flugdrohne 12 nach oben in eine Aufnahme 12a der Flugdrohne 12 verfahren. Dabei werden die Spannungsschnittstellen 26a, 26b über die Steckverbindung 28 und die Schnittstellen 36a, 36b über die Steckverbindung 38 miteinander verbunden. Hierdurch wird die mobile Vorrichtung 14 mit Spannung aus der Batterie 24 der Flugdrohne 12 versorgt und ein Datenaustausch über die Antenne 32 der Kommunikationseinheit 30 der Flugdrohne 12 mit den Kommunikationseinheiten 60 und 74 der mobilen Vorrichtung 14 auf der einen Seite und einer zentralen Recheneinheit auf der anderen Seite ermöglicht. Wie oben ausgeführt, kann die zentrale Recheneinheit, welche vom Trägersystem 10 unabhängig ist, auch ein Smartphone sein.

In einem nächsten Schritt 90 werden die ermittelten Maßnahmen mit dem Trägersystem 10 auf dem landwirtschaftlichen Feld durchgeführt. Beispielsweise fliegt die Flugdrohne 12 zu dem zu bearbeitenden Bereich des landwirtschaftlichen Feldes. Der Arm 48 mit der Werkzeugeinheit 52 fährt zu dem zu entfernenden Beikraut. Die Vorschubeinheit 54 verfährt die Fräse 58 so zu dem Beikraut, dass dieses mit Aktivieren der Rotationseinheit 56 weggefräst wird.

In einem fünften Schritt 92 fliegt dann die Flugdrohne 12 zurück, und tauscht die mobile Vorrichtung 14 gegen eine andere mobile Vorrichtung 14 aus, welche für eine andere Maßnahme optimiert ist, beispielsweise mit einer Ausbringvorrichtung für Schädlingsbekämpfungsmittel oder Dünger.

Alternativ können die Schritte 86 und 88 auch entfallen, wenn die Flugdrohne 12 bereits fertig für die durchzuführende Maßnahme gerüstet ist.

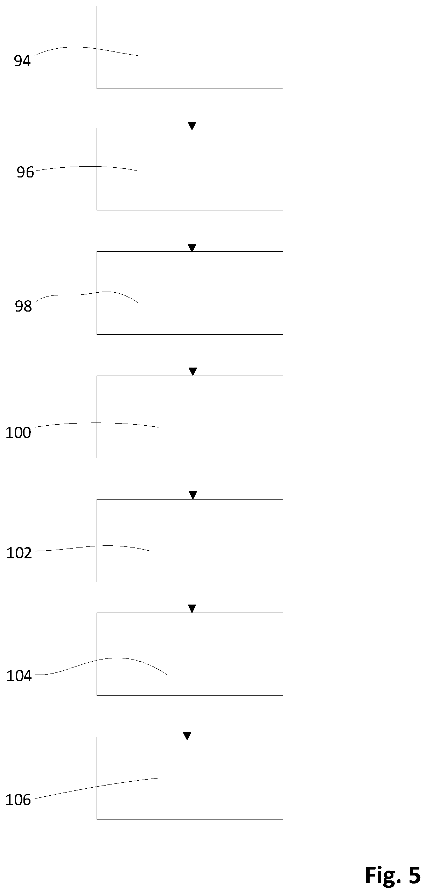

Anhand der Figur 5 wird nunmehr das Ermitteln der notwendigen Maßnahmen durch das Trägersystem 10, insbesondere durch die mobile Vorrichtung 14 im Einzelnen dargelegt.

In einem ersten Schritt 94 erfolgt die kontinuierliche Aufnahme von Daten technisch definierter Voxel und/oder Pixel und/oder Bilder durch die visuelle Detektionseinheit 62 der mobilen Vorrichtung 14. Die Voxel, Pixel und Bilder bilden Aufnahmedaten, welche fortlaufend an die Datenbank 78 übermittelt werden - zweiter Schritt 96.

In einem dritten Schritt 98 erfolgt die erfolgt die Speicherung der Aufnahmedaten.

In einem vierten Schritt 100 erfolgt ein qualitativer Datenabgleich der Aufnahmedaten mit den in der Datenbank 78 hinterlegten Daten. Hierbei erfolgt die Durchführung einer Segmentierung und Datenreduktion der Aufnahmedaten durch die Segmentierung- und Datenreduktioneinrichtung 66. Insbesondere kann auch eine Verifikation der Aufnahmedaten durch den zweiten Rechner 76 erfolgen.

In einem fünften Schritt 102 erfolgt die Bewertung durch den Klassifikator 68 in Verbindung mit dem zweiten Rechner 76 durch Unterstützung von Künstlicher Intelligenz, wie weiter unten noch ausführlich dargelegt wird.

In einem sechsten Schritt 104 erfolgt schließlich die Verarbeitung und Umsetzung der Bewertung durch den ersten Rechner 46 in regelungs- und steuerungstechnische Daten für den Motor 50, den Arm 48, die Werkzeugeinheit 52 und die Flugdrohne 12.

In einem siebten Schritt 106 erfolgt schließlich das Anfahren des Motors 50, des Arms 48 und der Werkzeugeinheit 52 zur Bearbeitung des Bodens oder zur Manipulation von Flora und Fauna.

Sofern in dieser Anmeldung von Künstlicher Intelligenz gesprochen wird, handelt es sich unter anderem um die Verwendung eines klassischen Convolutional Neural Networks - CNN - aus einem oder mehreren Convolutional Layer, gefolgt von einem Pooling Layer. Diese Folge aus Convolutional Layer und Pooling Layer kann sich prinzipiell beliebig oft wiederholen. In der Regel liegt die Eingabe als zwei- oder dreidimensionale Matrix, z. B. die Pixel eines Graustufen- oder Farbbildes, vor. Dementsprechend sind die Neuronen im Convolutional Layer angeordnet.

Die Aktivität jedes Neurons wird über eine diskrete Faltung (convolutional) berechnet. Intuitiv wird dabei schrittweise eine vergleichsweise kleine Faltungsmatrix (Filterkernel) über die Eingabe bewegt. Die Eingabe eines Neurons im Convolutional Layer berechnet sich als inneres Produkt des Filterkernels mit dem aktuell unterliegenden Bildausschnitt. Dementsprechend reagieren benachbarte Neuronen im Convolutional Layer auf sich überlappende Bereiche.

Ein Neuron in diesem Layer reagiert nur auf Reize in einer lokalen Umgebung des vorherigen Layers. Dies folgt dem biologischen Vorbild des rezeptiven Feldes. Zudem sind die Gewichte für alle Neuronen eines Convolutional Layers identisch (geteilte Gewichte, englisch: shared weights). Dies führt dazu, dass beispielsweise jedes Neuron im ersten Convolutional Layer codiert, zu welcher Intensität eine Kante in einem bestimmten lokalen Bereich der Eingabe vorliegt. Die Kantenerkennung als erster Schritt der Bilderkennung besitzt hohe biologische Plausibilität. Aus den shared weights folgt unmittelbar, dass Translationsinvarianz eine inhärente Eigenschaft von CNNs ist.

Der mittels diskreter Faltung ermittelte Input eines jeden Neurons wird nun von einer Aktivierungsfunktion, bei CNNs üblicherweise Rectified Linear Unit, kurz ReLu (f(x) = max(0, x), in den Output verwandelt, der die relative Feuerfrequenz eines echten Neurons modellieren soll. Da Backpropagation die Berechnung der Gradienten verlangt, wird in der Praxis eine differenzierbare Approximation von ReLu benutzt: f(x) = In(1 + e^{x}). Analog zum visuellen Cortex steigt in tiefer gelegenen Convolutional Layers sowohl die Größe der rezeptiven Felder als auch die Komplexität der erkannten Features.

Im folgenden Schritt, dem Pooling, werden überflüssige Informationen verworfen. Zur Objekterkennung in Bildern etwa, ist die exakte Position einer Kante im Bild von vernachlässigbarem Interesse - die ungefähre Lokalisierung eines Features ist hinreichend. Es gibt verschiedene Arten des Poolings. Mit Abstand am stärksten verbreitet ist das Max-Pooling, wobei aus jedem 2 × 2 Quadrat aus Neuronen des Convolutional Layers nur die Aktivität des aktivsten (daher "Max") Neurons für die weiteren Berechnungsschritte beibehalten wird; die Aktivität der übrigen Neuronen wird verworfen. Trotz der Datenreduktion (im Beispiel 75 %) verringert sich in der Regel die Performance des Netzwerks nicht durch das Pooling.

Der Einsatz des Convolutional Neural Networks und der Segmentierung- und Datenreduzierungseinrichtung 66 wird im Folgenden anhand der Bilder 6 bis 14 näher erläutert.

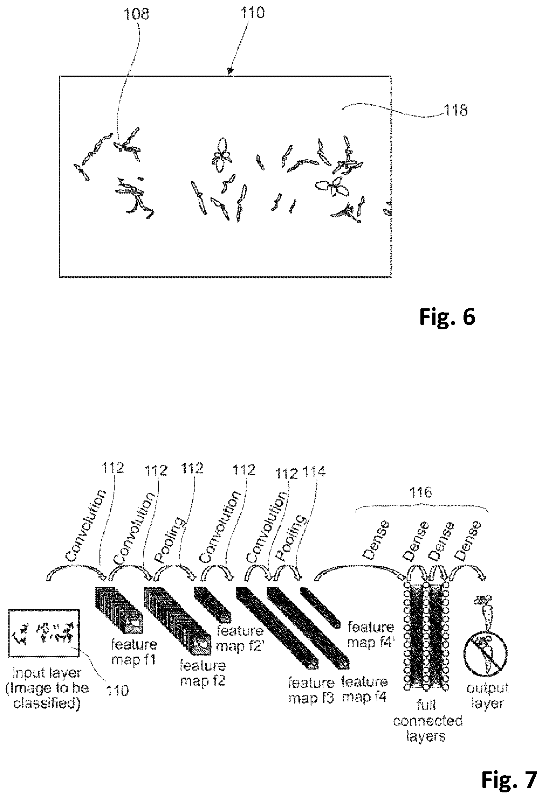

Für die Klassifikation durch den Klassifikator 68 aller Objekte in einem Bild existieren verschiedene Ansätze. Viele Ansätze beginnen damit die einzelnen Objekte erst im Bild zu finden und anschließend zu klassifizieren. Dies ist jedoch nicht immer möglich. Als Beispiel soll hier die Klassifikation von Pflanzen 108 eines Feldes herangezogen werden. Ein Beispielbild 108 zeigt Fig. 6.

In Fig. 6 sind verschiedene Pflanzen 108 abgebildet und sollen durch den Klassifikator 68 alle klassifiziert werden und dies in Echtzeit. Die Echtzeit soll in diesem Fall hier der Kameratakt von 10 Bilder pro Sekunde sein. Da wie hier im Beispiel nicht einfach unterschieden werden kann, wo genau eine Pflanze 110 endet, muss eine andere Herangehensweise verwendet werden, da die Rechenzeit nicht ausreicht, erst die Pflanzen 110 an sich zu unterscheiden und anschließend noch zu klassifizieren.

Das Bild 108 von Fig. 6 besteht aus Pixeln und jeder Pixel kann logischerweise nur genau eine Klasse beinhalten. Daher wäre ein trivialer Ansatz das gesamte Bild 108 pixelweise zu klassifizieren. Das soll heißen jeder Pixel wird nacheinander einer Klasse zugeordnet.

Da jedoch ein einzelner Pixel nicht die nötige Information enthält, um eine Aussage über die Klassenzugehörigkeit zu treffen, muss eine umliegende Fläche zur Klassifikation herangezogen werden. Diese Fläche kann dann mit einen Convolution Neuronalen Netzwerk (CNN), wie es oben beschrieben wurde, klassifiziert werden. Das Netzwerk kann dabei eine Folge wie Fig. 7 aufweisen.

Das Eingangsbild 110 ist hier das Bild von Fig. 6. Auf dieses Eingangsbild 110 werden nun die Elemente des CNN angewendet. In diesem Beispiel wären das die Convolution 112 mit den Featuren, ein anschließendes Pooling 114, eine weitere Convolution mit weiteren Featuren, ein erneutes Pooling und eine Zusammenfassung in der Dense Schicht 116. Der Ausgang des Netzwerkes gibt dann die Klassenzugehörigkeit des mittleren Pixels des Eingangsbildes 110 aus, beziehungsweise eines Pixels des Bildes 110 von Fig. 6.

Anschließend wird ein neuer Bildausschnitt, in der Regel ein Bildausschnitt das um einen Pixel verschoben ist, gewählt und wieder mittels CNN klassifiziert. Dieses Vorgehen hat zur Folge, dass die Berechnungen, die das Convolution Neuronale Netzwerk benötigt, für die Anzahl der zu klassifizierenden Pixeln wiederholt werden muss. Dies ist zeitaufwändig. Das Bild 110 von Fig. 6 hat eine Auflösung von 2000 x 1000 Pixeln. Das CNN müsste also zwei Millionen Mal berechnet werden. Das Ausgangsproblem ist jedoch nur die Klassifikation der Pflanzen 108 an sich. Im Durchschnitt enthält ein solches Bild etwa 5% Pflanzenpixel, das entspricht etwa nur 100.000 Pixel.

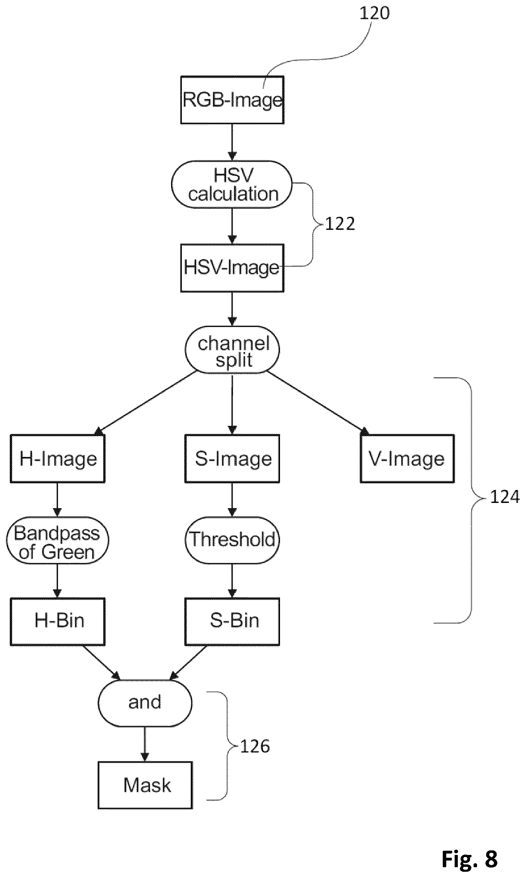

Mittels einfacher Segmentierung und Datenreduktion durch die Segmentierungs- und Datenreduktionseinheit 66 kann herausgefunden werden, ob es sich bei einem Pixel um die Darstellung eines Teils einer Pflanze 108 oder um Hintergrund 118 handelt. Diese Segmentierung ist von der Berechnung nicht so komplex wie ein CNN und daher schneller. Die Segmentierung und Datenreduktion durch die Segmentierung- und Datenreduktioneinheit 66 erfolgt dabei analog der Fig. 8. In Fig. 8 sind die einzelnen Schritte dargestellt.

In einem ersten Schritt 120 wird jedes an die Datenbank 78 übermittelte Bild aus mehreren Pixeln in das RGB-(Red, Green, Blue)-Farbmodell überführt.

In einem nächsten Schritt 122 wird jeder Pixel des übermittelten Bildes basierend auf dem RGB-Farbmodell in ein HSV (hue, saturation, value)-Farbmodell transferiert.

In einem nächsten Schritt 124 wird dieses HSV-Farbmodell bewertet.

Jeder Pixel basierend auf dem HSV-Farbmodell wird im Hinblick auf die Farbsättigung (saturation) anhand eines Schwellenwertes bewertet, wobei wenn der Wert der Farbsättigung einen Schwellenwert übersteigt, der Pixel dem binären Wert 1 zugeordnet wird, und wenn der Wert der Farbsättigung einen Schwellenwert unterschreitet, das Pixel dem binären Wert 0 zugeordnet wird.

Parallel hierzu wird jeder Pixel basierend auf dem HSV-Farbmodell im Hinblick auf den Farbwinkel (hue) anhand eines vorbestimmten Bereiches bewertet, wobei wenn der Farbwinkel in dem vorbestimmten Bereich liegt, das Pixel dem binären Wert 1 zugeordnet wird, und wenn der Farbwinkel außerhalb des Bereichs liegt, das Pixel dem binären Wert 0 zugeordnet wird.

In einem nächsten Schritt 126 wird aus den binären Informationen des Farbwinkels und der Farbsättigung ein Zwischenbild erzeugt, welches erheblich weniger Daten als das von der Kamera erzeugte Bild 108 enthält.

Aus der Segmentierung aus Fig. 8 ergibt sich die im Folgenden angegebene Formel, die auf jeden Pixel angewendet werden muss. Das segmentierte Bild S(x,y) wird über die Aufteilung des RGB-Bildes *ψ*(*x*,*y*) in seine drei Bestandteile Rot, Grün und Blau aufgeteilt. Ein Pixel des segmentierten Bildes wird dann auf 1 gesetzt, wenn der minimale Wert von Rot, Grün oder Blau eines Pixels durch den Grünen Pixel geteilt kleiner oder gleich ist wie ein Schwellenwert (*THs*)*.* Wobei der Schwellenwert in den 8 Bit Raum des Bildes über die Skalierung mittels 255 erfolgt. Sollte der Schwellenwert nicht erreicht werden, wird wie in Gleichung 1 der Pixel des segmentierten Bildes auf 0 gesetzt. $S \left(x, y\right) = \left\{\begin{matrix}1 & if \frac{MIN \left({φ}_{med}\left(x, y\right).{φ}_{Cmed}\left(x, y\right).{φ}_{Emed}\left(x, y\right)\right)}{{φ}_{Cmed} \left(x, y\right)} \leq \frac{255 - THs}{255} \\ 0 & otherwise\end{matrix}\right.$ (1)

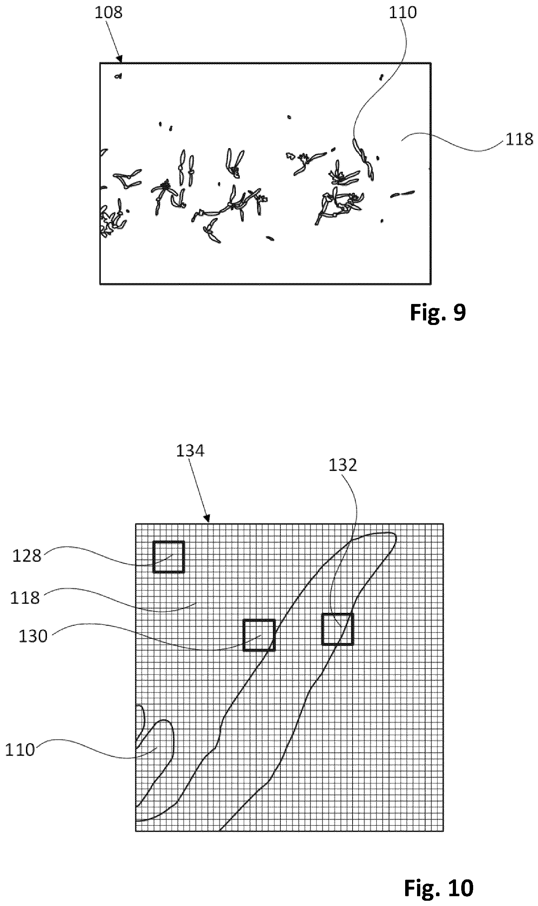

Damit ergibt sich die erste Optimierung: Bevor das gesamte Bild 108 in zwei Millionen Bilder zerlegt wird, wird die Segmentierung, gemäß Fig. 8, angewendet. Das heißt das gesamte Bild 108 wird durchlaufen und mittels der oben angegebenen Formel entschieden, ob es sich um ein Pflanzenpixel handelt oder nicht. Zum einen wird das Bild 108 segmentiert, das heißt der Hintergrund 118 wird auf Schwarz (0) gesetzt, wie dies in Fig. 9 dargestellt ist. Zum anderen wird, sofern es sich um ein Pflanzenpixel handelt, dessen Koordinaten in eine Liste geschrieben. Anschließend werden nur noch die Koordinaten in das CNN gegeben, die auch in dieser Liste stehen. Die unnötigen Pixel der Erde, also des Hintergrundes 118, entfallen. Damit wird das CNN in etwa 20-mal weniger aufgerufen.

Durch die Segmentierung wird der Hintergrund 118 auf den Wert 0 gesetzt. Auch die Bildelemente die das CNN betrachtet, besitzen nun segmentierte Bilder. Normalerweise würde auf eine Convolution-Schicht die Feature-Berechnung auf jeden Pixel des Bildelementes angewendet werden. Damit ergeben sich jedoch drei Fälle 128, 130, 132 für die Berechnung die in Fig. 10 dargestellt sind, jeweils für einen Feature 134 der Größe 5x5.

Der Rote Fall 128 zeigt eine Feature-Berechnung, in dem das Feature komplett auf dem Hintergrund 118 liegt. Hier wird jedes Element mit 0 multipliziert, das hat zur Folge, dass die gesamte Berechnung 0 ergibt, beziehungsweise den Biaswert. Das Ergebnis dieser Berechnung ist daher schon vor der Rechnung bekannt. Selbst wenn der Hintergrund 118 nicht Null wäre, also Erde aufweisen würde, würde diese Berechnung keine Information über die Pflanze 110 beinhalten, daher kann das Ergebnis einfach ein konstanter fiktiver Wert sein.

Im Gelben Fall 130 liegt der mittlere Feature-Wert nicht auf einer Pflanze 110. Das heißt, dass ein Teil ebenfalls eine Multiplikation mit Null ist. Dieser Fall verzehrt die Pflanze 110 im Randbereich und macht diese Größe in der Feature-Map.

Im Blauen Fall 132 liegt mindestens der mittlere Pixel des Features auf einer Pflanze.

Nach Betrachtung dieser drei Fälle 128, 130, 132 müssen nur der Gelbe und Blaue Fall 130 und 132 berechnet werden. Also die Fälle 130, 132 in denen das Feature mindestens einen Eingangswert ungleich Null hat. Von allen anderen Feature-Berechnungen sind Ergebnisse vor der Berechnung bekannt, sie sind Null beziehungsweise weisen lediglich den Bias Wert auf. Die Koordinaten in denen der Blaue Fall 132 auftritt, sind bekannt. Das sind die Koordinaten die bei der Segmentierung gespeichert werden. Der Gelbe Fall 130 benötigt wiederum eine Berechnung, ob diese eingetreten ist. Dies verlangt eine Überprüfung jedes in der Segmentierung gefundenen Pflanzenpixels. Da diese Kontrolle ein zu großer Aufwand ist und der Gelbe Fall 130 nur im Randbereich einer Pflanze 110 auftritt, soll dieser Fall ignoriert werden.

Daher kann die Berechnung dahingehend optimiert werden, dass die Feature-Berechnung und alle anderen Elemente des CNNs nur auf die gefundenen Pflanzenpixel angewendet werden sollen.

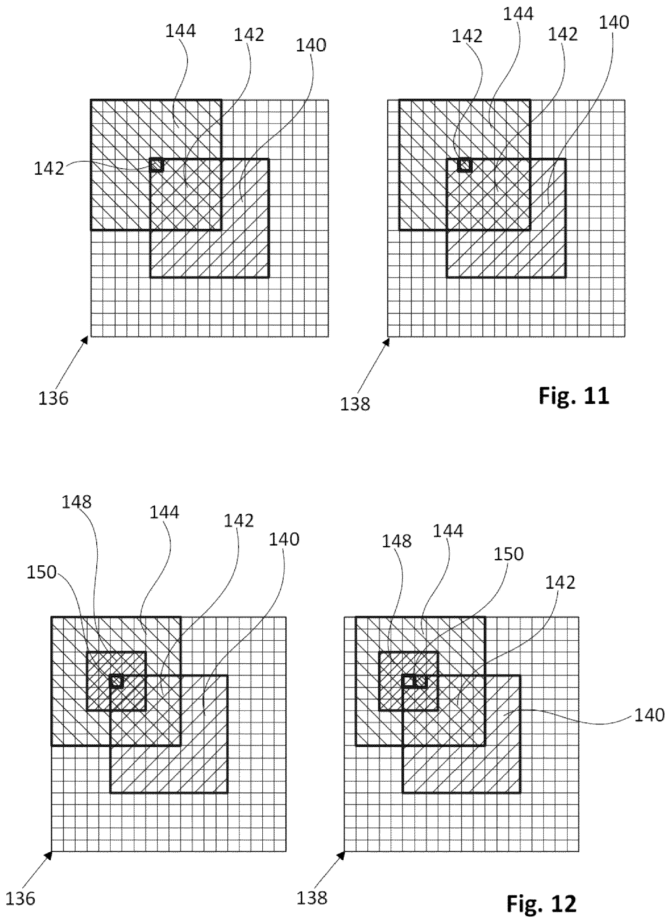

In Fig. 11 ist schematisch dargestellt, wie sich zwei benachbarte Pflanzenpixel 136, 138 unterscheiden. Links ein Pflanzenpixel 136 und rechts der Nachbar-Pflanzenpixel 138. Der Blaue/Purpur Bereich 140, 142 könnten verschiedene Pflanzen sein, die klassifiziert werden müssen. Der Rote/Purpur Bereich 144, 142 stellt das Bildelement da, das das CNN betrachtet, um den orangenen Pixel 146 zu klassifizieren.

Bei genauer Betrachtung kann festgestellt werden, dass der betrachtete Bereich (Rot/Purpur) 144, 142 sich stark überlappt. Das bedeutet wiederum, dass in beiden Bildelementen 136, 138 größtenteils dieselben Werte stehen. Wenn nun das CNN das Feature in der Convolution-Schicht berechnet, würde auch aus der Feature-Berechnung dieselben Werte errechnet werden.

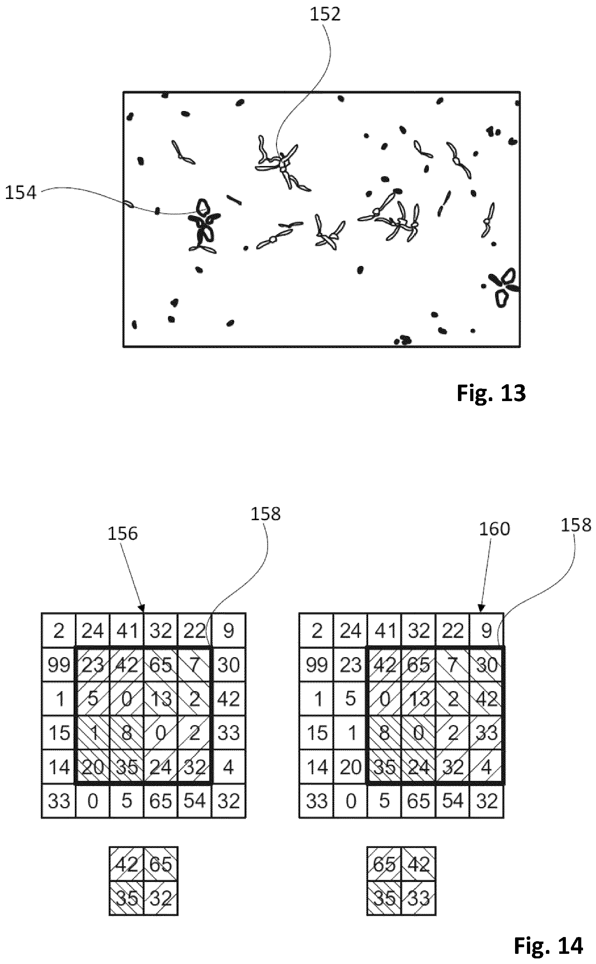

In Fig. 12 ist schematisch ein Feature 148 mit der Größe von 5 x 5 Pixel in Grün skizziert. Dieses Feature 148 steht an denselben Koordinaten innerhalb des gesamten Bildes, jedoch ist es verschoben innerhalb des vom CNN zu betrachtenden Bildelementes (Rot/Purpur) 144, 142. Da die Örtlichkeit jedoch im gesamten Bild dieselbe ist würde die Berechnung für den mittleren schwarzen Kasten 150 denselben Wert sowohl im linken Bild 136 als auch im rechten Bild 138 ergeben. Diese Erkenntnis lässt sich auf alle Elemente eines CNN anwenden. Dadurch kann, sofern der Randbereich ignoriert wird, die einzelne Feature-Berechnung zuerst auf das gesamte Bild angewendet werden. Theoretisch spielt die Zerlegung des Eingangsbildes 108 erst mit dem Dense-Layer 116 eine entscheidende Rolle. Das Dense-Layer 116 kann jedoch genauso wie eine Convolution 112 berechnet werden. Die Featuregröße ergibt sich dabei aus dem Zusammenspiel von Eingangsbildgröße und den vorhandenen Pooling Layern im Netzwerk. Damit lässt sich die Klassifikation weiter optimieren, es werden nun die CNN-Elemente lediglich auf die gefundenen Pflanzenpixel angewendet. Die Feature-Map, die aus der letzten Convolution errechnet wird, stellt das Klassifikationsergebnis dar, wie dies in Fig. 13 dargestellt ist. Hier sind in Grün alle Karottenpflanzen 152 und in Rot das gesamte Unkraut 154 Pixelweise klassifiziert.

Durch diese Optimierungen erfolgen jedoch auch Veränderungen am Ergebnis der Klassifikation. Den größten Einfluss haben hierbei die Pooling Schichten. Bei jedem Pooling wird Information aus dem Netzwerk entfernt. Durch das nicht mehr vorhandene einzelne Betrachten der Bildelemente verliert das Pooling jedoch einen örtlichen Bezug. Die Fig. 14 veranschaulicht das Problem.

In der Fig. 14 ist jeweils ein Bildelement 156 als roter Rahmen 158 dargestellt. Vor der Optimierung würde jedes Bildelement einzeln durch das CNN laufen um seinen mittleren Pixel zu klassifizieren. Das rechte Bildelement 160 ist um einen Pixel weiter nach rechts verschoben. Die vier Farben: Purpur, Blau, Gelb und Grün zeigen die einzelnen Anwendungen des Poolings an. Wie zu sehen ist, können sie verschiedene Ergebnisse ergeben, da das Pooling immer am Rand beginnt und um ein Pooling Element (hier zwei Felder) weiterwandert. Dadurch ergeben sich aus zwei benachbarten Bildelementen 156, 160 zwei verschiedene Pooling Elemente. Das hat zur Folge, wenn dies in der Optimierung berücksichtigt werden soll, würden sich mit jedem Pooling zwei neue Zweige für die weitere Berechnung ergeben. Da das Pooling einmal auf das gesamte Bild angewendet werden müsste mit Startpunkt oben links und ein weiteres Pooling mit dem Startpunkt oben links plus einen Pixel. In der weiteren Berechnung müssten dann beide Pooling Ergebnisse separat weiterverarbeitet werden. Bei einem weiteren zweiten Pooling würden sich wieder zwei neue Pfade ergeben, so dass vier separate Ergebnisse berechnet werden müssten. Das Ergebnis setzt sich anschließend aus den vier Ergebnissen Pixelweise rotierend durch die Ergebnisse zusammen. Wird nur ein Pfad nach dem Pooling betrachtet, wäre das Ausgangsbild nach zweimaligem Pooling kleiner. Die Länge und Breite des Ausgangsbildes wäre dann jeweils nur ¼ so groß wie das Eingangsbild. Bei der Betrachtung aller Pfade würde etwa die Eingangsbildgröße herauskommen.

Ein weiterer Unterschied stellen die fehlenden Randbereiche der Pflanzen dar. Da die Features nicht auf alle Elemente angewendet werden, indem sie irgendeine Überlappung mit der Pflanze besitzen, existieren hier Berechnungsunterschiede. Auch dies kann das Klassifikationsergebnis verändern zu der herkömmlichen Berechnung.

Die fehlende Berechnung der Feature-Werte außerhalb der Pflanze können dahingehend andere Werte hervorrufen, da das Ergebnis mit Null ausgewiesen wird, was allerdings in Wirklichkeit der Biaswert ist.

Zwar beeinflussen diese drei Faktoren die Ergebnisse, jedoch zeigt sich, dass das CNN sehr robust ist und damit die Ergebnisse immer noch einen sehr hohen Genauigkeitswert erfüllen.

Der nächste Schritt wäre, das Netzwerk direkt mit diesen Modifikationen zu trainieren, damit das Netzwerk sich noch besser auf seine neue Berechnung einstellen kann und somit etwaige Fehler direkt in der Berechnung kompensiert.

Die Segmentierung- und Datenreduktionseinrichtung versieht die Pixel betreffend das Unkraut 154 mit Lagekoordinaten.

### Bezugszeichenliste

- 10: Trägersystem
- 12: Flugdrohne
- 12a: Aufnahme, Aufnahmeraum der Flugdrohne 12
- 12b: Steuereinrichtung der Flugdrohne
- 14: mobile Vorrichtung
- 14a: erste Einheit
- 14b: zweite Einheit
- 14c: Aufnahme für Greifarm an der mobilen Vorrichtung 14
- 16: Antrieb
- 18: Elektromotor
- 20: Propeller
- 22: Füße
- 24: Batterie
- 26a: Spannungsschnittstelle an der Flugdrohne 12
- 26b: Spannungsschnittstelle an der mobilen Vorrichtung 14
- 28: Steckverbindung
- 30: Kommunikationseinheit
- 32: Antenne
- 34: GPS-Einheit
- 36a: Schnittstelle an der Flugdrohne 12
- 36b: Schnittstelle an der mobilen Vorrichtung 14
- 38: Steckverbindung
- 40: erstes Gehäuse der ersten Einheit 14a
- 42: zweites Gehäuse der zweiten Einheit 14b
- 44: Steckverbindung
- 46: erster Rechner
- 48: Arm als Aktor
- 50: Motor
- 52: Werkzeugeinheit
- 54: Vorschubeinheit
- 56: Rotationseinheit
- 58: Fräse
- 60: erste Kommunikationseinheit der ersten Einheit 14a
- 62: visuelle Detektionseinheit
- 64: Kamera
- 66: Segmentierung- und Datenreduktioneinrichtung
- 68: Klassifikator
- 70a: Schnittstelle der ersten Einheit 14a
- 70b: Schnittstelle der zweiten Einheit 14b
- 72: Kommunikationsverbindung
- 74: zweite Kommunikationseinheit der zweiten Einheit 14b
- 76: zweiter Rechner
- 78: Datenbank
- 80: Steckverbindung
- 82a: Greifarm, links
- 82b: Greifarm, rechts
- 84: erster Schritt: Ermitteln der notwendigen Maßnahmen
- 86: zweiter Schritt: Aussuchen der mobilen Vorrichtung 14 aus der zur Verfügung stehenden mobilen Vorrichtungen 14
- 88: dritter Schritt: Verbinden der Vorrichtung mit der Flugdrohne 12
- 90: vierter Schritt: Durchführen der ermittelten Maßnahmen
- 92: fünfter Schritt: austauschen der mobilen Vorrichtung 14 gegen eine andere mobile Vorrichtung 14 und Durchführung einer weiteren Maßnahme
- 94: erster Schritt: kontinuierliche Aufnahme
- 96: zweiter Schritt: Übermittlung der Daten
- 98: dritter Schritt: Speicherung der Daten
- 100: vierter Schritt: Datenabgleich
- 102: fünfter Schritt: Bewertung durch den Klassifikator 68
- 104: sechster Schritt: Umsetzung in Regelung-und steuerungstechnische Daten
- 106: siebter Schritt: Anfahren der Aggregate
- 108: Beispielsbild, Eingangsbild
- 110: Pflanze
- 112: Convolution
- 114: Pooling
- 116: Zusammenfassung in einer Dense-Schicht
- 118: Hintergrund
- 120: erster Schritt: Überführen in ein RGB-Farbmodell
- 122: zweiter Schritt: Transferieren in ein HSV-Farbmodell
- 124: dritter Schritt: Bewertung des HSV-Bildes
- 126: vierter Schritt: Erzeugen eines Zwischenbildes
- 128: erster Fall, rot
- 130: zweiter Fall, gelb
- 132: dritter Fall, blau
- 134: Feature
- 136: Pflanzenpixel, links
- 138: Pflanzenpixel, rechts
- 140: blauer Bereich
- 142: purpurner Bereich
- 144: roter Bereich
- 146: oranger Bereich
- 148: Feature, grün
- 150: mittlerer schwarzer Kasten
- 152: Karottenpflanze
- 154: Unkraut, Beikraut
- 156: Bildelement, links
- 158: roter Rahmen
- 160: Bildelement, rechts

## Patentansprüche

1. Mobile Analyse- und Bearbeitungsvorrichtung (14) für die Landwirtschaft zur Bearbeitung des Bodens und/oder zur Manipulation von Flora und Fauna, umfassend zumindest einen Sensor (62), eine Werkzeugeinheit (52) mit zumindest einem motorisch angetriebenen Werkzeug (58), einen Aktor (48) zum Verfahren zumindest des Werkzeugs (58) der Werkzeugeinheit (52), einen Motor (50) zum Antreiben der Werkezugeinheit (52) und/oder des Aktors (48), eine Datenbank (78), eine erste Kommunikationseinheit (60) mit Schnittstelle (70a) und einen ersten Rechner (46) zum Steuern des Sensors (62), der Werkzeugeinheit (52) und des Aktors (48) aufgrund generierter Steuerbefehle, wobei der erste Rechner (46) so konfiguriert ist, dass die über den Sensor (62) erfassten Daten mit den in der Datenbank (78) hinterlegten Daten fortlaufend abgeglichen werden, um entsprechende Steuersignale für den Aktor (48), die Werkzeugeinheit (52) und/oder den Motor (50) zu generieren, wobei der Sensor eine visuelle Detektionseinheit (62) ist, die umfasst:
eine Kamera (64), mit der Bilder erfasst werden,
eine Segmentierungs- und Datenreduktionseinrichtung (66), so konfiguriert ist, dass diese
a. jedes von der Kamera (64) aufgenommene Bild aus einer Vielzahl von Pixeln in einem RGB-Farbmodell (Rot, Grün und Blau) erzeugt,
b. jeder Pixel basierend auf dem RGB-Farbmodell (Rot, Grün, Blau) in ein HSV (hue, saturation, value)-Farbmodell transferiert,
c. aus binären Informationen der einzelnen Pixel ein Zwischenbild erzeugt, einen Klassifikator (68), der so konfiguriert ist, dass dieser auf Basis eines von der Segmentierung- und Datenreduzierungseinrichtung (66) erzeugten Zwischenbildes oder Zwischendaten die Klassifikation übernimmt,
**dadurch gekennzeichnet, dass**
die Segmentierungs- und Datenreduktionseinrichtung (66) weiterhin so konfiguriert ist, dass diese
d. das Zwischenbild aus den binären Informationen umfassend den Farbwinkel und die Farbsättigung der einzelnen Pixel erzeugt wird, welches erheblich weniger Daten als das von der Kamera erzeugte Bild enthält;
e. jedes Pixel basierend auf dem HSV-Farbmodells im Hinblick auf die Farbsättigung (saturation) anhand eines Schwellenwertes bewertet, wobei, wenn der Wert der Farbsättigung einen Schwellenwert übersteigt, der Pixel dem binären Wert *"1"* zugeordnet wird, und wenn der Wert der Farbsättigung einen Schwellenwert unterschreitet, der Pixel dem binären Wert *"0"* zugeordnet wird,
f. parallel jeder Pixel basierend auf dem HSV-Farbmodell im Hinblick auf den Farbwinkel (hue) anhand eines vorbestimmten Bereiches bewertet, wobei wenn der Farbwinkel in dem vorbestimmten Bereich liegt, das Pixel dem binären Wert *"1"* zugeordnet wird, und wenn der Farbwinkel außerhalb des Bereichs liegt, das Pixel dem binären Wert *"0"* zugeordnet wird,
g. Pixelfelder von den Pixeln des Zwischenbildes erzeugt,
wobei der Klassifikator der so konfiguriert ist, dass dieser auf Basis des von der Segmentierung- und Datenreduzierungseinrichtung (66) erzeugten Zwischenbildes oder
Zwischendaten die Klassifikation aus Pixeln bestehender Pixelfelder übernimmt, wobei nur diejenigen Pixelfelder klassifiziert werden, die mindestens ein Pixel haben, dem der Binärwert *"1"* zugeordnet ist.

2. Analyse- und Bearbeitungsvorrichtung nach Anspruch 1, **dadurch gekennzeichnet, dass** der Datenabgleich der durch den Sensor (62) ermittelten Daten mit der Datenbank (78) in Echtzeit erfolgt, insbesondere mit einer Verifikation und Klassifikation der durch den Sensor (62) ermittelten Daten.

3. Analyse- und Bearbeitungsvorrichtung nach Anspruch 1 oder 2, **dadurch gekennzeichnet, dass** die visuelle Detektionseinheit (62) ist mit der Kommunikationseinheit (60) verbunden.

4. Analyse- und Bearbeitungsvorrichtung nach einem der vorangehenden Ansprüche, **dadurch gekennzeichnet, dass** Mittel (82a, 82b) zum bedarfsweisen Verbinden mit einem Träger (12) vorgesehen sind, welcher die Analyse- und Bearbeitungsvorrichtung (14) bewegt.

5. Analyse- und Bearbeitungsvorrichtung nach einem der vorangehenden Ansprüche, **gekennzeichnet durch** eine zweigeteilte Ausbildung, wobei in einer ersten Einheit (14a) der Sensor (62), die Werkzeugeinheit (52), der Motor (50) zum Antreiben des Werkzeugs (58), der Werkzeugeinheit (52) und/oder des Aktors (48), der Aktor (48), der erste Rechner (46) und die erste Kommunikationseinheit (60) mit Schnittstelle (70a) vorgesehen sind und in der zweiten Einheit (14b) die Datenbank (78), ein zweiter Rechner (76) und eine zweite Kommunikationseinheit (74) mit Schnittstelle (36b, 70b), vorgesehen sind, wobei die erste Einheit (14a) und die zweite Einheit (14b) über die Schnittstellen (70a, 70b) zum Datenaustausch miteinander verbindbar sind.

6. Analyse- und Bearbeitungsvorrichtung nach Anspruch 5, **dadurch gekennzeichnet, dass** die erste Einheit (14a) ein erstes Gehäuse (40) und die zweite Einheit (14b) ein zweites Gehäuse (42) umfasst.

7. Analyse- und Bearbeitungsvorrichtung nach Anspruch 6, **dadurch gekennzeichnet, dass** das erste und das zweite Gehäuse (40, 42) über eine Steckverbindung (44, 80) lösbar miteinander verbunden sind.

8. Analyse- und Bearbeitungsvorrichtung nach Anspruch 6 oder 7, **dadurch gekennzeichnet, dass** das erste und das zweite Gehäuse (40, 42) als Mittel für das bedarfsweise Verbinden mit dem Träger (12) Aufnahmen (14c) aufweist, welche entsprechenden Haltemitteln (82a, 82b) des Trägers (12) zugeordnet sind, über welche die Vorrichtung (14) durch den Träger (12) ergriffen und bewegt werden kann.

9. Analyse- und Bearbeitungsvorrichtung nach einem der Ansprüche 6 bis 8, **dadurch gekennzeichnet, dass** das erste und das zweite Gehäuse (40, 42) als Mittel für das bedarfsweise Verbinden mit dem Träger (12) Kupplungsmittel (26b, 28, 36b, 38) aufweist, welche entsprechenden Kupplungsmitteln (26a, 28, 36a, 38) des Trägers (12) zugeordnet sind, über welche die Vorrichtung (14) mit dem Träger (12) verbunden und bewegt werden kann.

10. Analyse- und Bearbeitungsvorrichtung nach einem der vorangehenden Ansprüche, **dadurch gekennzeichnet, dass** die Werkzeugeinheit (52) mindestens eine Vorschubeinheit (54) und eine Rotationseinheit (56) aufweist, welche mit dem Motor (50) zusammenwirkt.

11. Analyse- und Bearbeitungsvorrichtung nach Anspruch 10, **dadurch gekennzeichnet, dass** die Rotationseinheit (56) an einem distalen Ende zumindest das Werkzeug (58) aufweist, insbesondere eine Fräse (58) oder eine Messereinheit.

12. Analyse- und Bearbeitungsvorrichtung nach einem der vorangehenden Ansprüche, **gekennzeichnet durch** einen Spannungsanschluss (26b) für eine externe Spannungsversorgung.

13. Analyse- und Bearbeitungsvorrichtung nach Anspruch 12 und einem der Ansprüche 4 bis 11, **dadurch gekennzeichnet, dass** der Spannungsanschluss (26b) an der ersten Einheit (14a) vorgesehen ist und über diesen die erste Einheit (14a) als auch die zweite Einheit (14b) mit Spannung versorgt ist.

14. Analyse- und Bearbeitungsvorrichtung nach einem der Ansprüche 4 bis 13, **gekennzeichnet durch** eine weitere Kommunikationsschnittstelle (36b) für einen Träger (12).

15. Analyse- und Bearbeitungsvorrichtung nach Anspruch 14, **dadurch gekennzeichnet, dass** die weitere Kommunikationsschnittstelle (36b) in der zweiten Einheit (14b) angeordnet ist.

16. Verfahren zur Echtzeitregelung der Bearbeitung des Bodens und/oder der Manipulation von Flora und Fauna durch die Analyse- und Bearbeitungsvorrichtung nach einem der vorangegangenen Ansprüche mit den folgenden Schritten:
a. zeitlich kontinuierliche Aufnahme datentechnisch definierter Voxel und/oder Pixel und/oder Bilder durch den Sensor;
b. Übermittlung der Aufnahmedaten an die Datenbank (78);
c. Speicherung der Aufnahmedaten in der Datenbank (78);
d. qualitativer Datenabgleich der Aufnahmedaten mit den in der Datenbank (78) hinterlegten Daten, vorzugsweise mit Durchführung einer Segmentierung, einer Datenreduktion und/oder einer Verifikation der Aufnahmedaten durch den Rechner (46, 76);
e. Bewertung der abgeglichenen Aufnahmedaten mit bestehenden definierten Datensätzen in der Datenbank (78) durch einen Klassifikator (68) in Verbindung mit dem Rechner (46, 76);
Verarbeitung und Umsetzung der Bewertung durch den Rechner (46, 76) in regelungs- und/oder steuerungstechnische Daten für den Motor (50), den Aktor (48), die Werkzeugeinheit (52) und/oder einem zugeordneten Träger (12), wobei während des Datenabgleichs die Aufnahmedaten an die Segmentierung- und Datenreduktioneinrichtung (66) übertragen werden, die ein Zwischenbild erzeugt, wobei
die Segmentierungs- und Datenreduktionseinrichtung (66) zum Erzeugen des Zwischenbildes folgende Schritte nacheinander durchführt:
a. jedes von der Kamera (64) aufgenommene Bild wird in Form einer Vielzahl von Pixeln in einem RGB-Farbmodell (Rot, Grün und Blau) erzeugt,
b. jeder Pixel basierend auf dem RGB-Farbmodell (Rot, Grün, Blau) wird in ein HSV (hue, saturation, value)-Farbmodell transferiert,
c. jedes Pixels basierend auf dem HSV-Farbmodells wird im Hinblick auf die Farbsättigung (saturation) anhand eines Schwellenwertes bewertet, wobei, wenn der Wert der Farbsättigung einen Schwellenwert übersteigt, der Pixel dem binären Wert *"1"* zugeordnet wird, und wenn der Wert der Farbsättigung einen Schwellenwert unterschreitet, der Pixel dem binären Wert *"0"* zugeordnet wird,
d. parallel zu dem ebengenannten Schritt wird jeder Pixel basierend auf dem HSV-Farbmodell im Hinblick auf den Farbwinkel (hue) anhand eines vorbestimmten Bereiches bewertet, wobei wenn der Farbwinkel in dem vorbestimmten Bereich liegt, das Pixel dem binären Wert *"1"* zugeordnet wird, und wenn der Farbwinkel außerhalb des Bereichs liegt, das Pixel dem binären Wert *"0"* zugeordnet wird,
e. aus den binären Informationen des Farbwinkels und der Farbsättigung der einzelnen Pixel wird ein Zwischenbild erzeugt, welches erheblich weniger Daten als das von der Kamera (64) erzeugte Bild enthält, wobei die Klassifizierung durch einen Klassifikator (68) erfolgt, der auf Basis eines von der Segmentierung- und Datenreduzierungseinrichtung (66) erzeugten Zwischenbildes oder Zwischendaten die Klassifikation mehrerer aus Pixeln bestehender Pixelfelder übernimmt; nur diejenigen Pixelfelder klassifiziert werden, die mindestens ein Pixel haben, dem der Binärwert *"1"* zugeordnet ist.

17. Verfahren nach Anspruch 16, **dadurch gekennzeichnet, dass** nach Vorliegen der regelungs- und/oder steuerungstechnischen Daten ein Anfahren des Motors (50), des Aktors (48), der Werkzeugeinheit (52) und/oder des Trägers (12) zur Bearbeitung des Bodens und/oder eines zugeordneten Trägers (12) zur Manipulation von Flora und Fauna erfolgt.

18. Verfahren nach Anspruche 16 oder 17, **dadurch gekennzeichnet, dass** die Bewertung in einem mit dem Klassifikator (68) zusammenwirkenden Rechner (46, 76), insbesondere in dem zweiten Rechner (76), und die Verarbeitung und Umsetzung der Bewertung in regelungs- und/oder steuerungstechnische Daten in einem anderen Rechner (46, 76), insbesondere in dem ersten Rechner (46), durchgeführt wird, wofür die Bewertung von dem einen Rechner (46, 76) an den anderen Rechner (46, 76) übermittelt wird.

19. Verfahren nach einem der Ansprüche 16 bis 18, **dadurch gekennzeichnet, dass** die Speicherung, der qualitative Datenabgleich der Aufnahmedaten mit in der Datenbank (78) hinterlegten Daten und/oder die Bewertung durch den Klassifikator (68) durch Künstliche Intelligenz unterstützt werden.

## Claims

1. Mobile analysis and processing device (14) for use in agriculture for cultivating the soil and/or for manipulating flora and fauna, comprising at least one sensor (62), a tool unit (52) with at least one motor-driven tool (58), an actuator (48) for moving at least the tool (58) of the tool unit (52), a motor (50) for driving the tool unit (52) and/or the actuator (48), a database (78), a first communication unit (60) with an interface (70a) and a first computer (46) for controlling the sensor (62), the tool unit (52) and the actuator (48) on the basis of generated control commands, wherein the first computer (46) is configured such that the data detected by the sensor (62) is continuously compared with the data stored in the database (78) so as to generate corresponding control signals for the actuator (48), the tool unit (52), and/or the motor (50), wherein
the sensor is a visual detection unit (62) that comprises:
a camera (64) for capturing images,
a segmentation and data reduction device (66) configured such that it
a. generates each image captured by the camera (64) from a plurality of pixels in an RGB color model (red, green, and blue),
b. converts each pixel into an HSV (hue, saturation, value) color model based on the RGB (red, green, blue) color model,
c. generates an intermediate image from binary information of the individual pixels, a classifier (68) configured such that it performs the classification based on an intermediate image or intermediate data generated by the segmentation and data reduction device (66),
**characterized in that**
the segmentation and data reduction device (66) is further configured such that it
d. generates the intermediate image from the binary information comprising the hue and saturation of the individual pixels, which intermediate image contains significantly less data than the image generated by the camera;
e. evaluates each pixel based on the HSV color model with respect to color saturation using a threshold value, such that, if the color saturation value is above a threshold value, the pixel will be assigned a binary value of 1, and, if the color saturation value is below a threshold value, the pixel will be assigned a binary value of 0,
f. in parallel with this, each pixel is evaluated based on the HSV color model with respect to hue angle using a predetermined range, such that, if the hue angle is within the predetermined range, the pixel will be assigned a binary value of 1, and, if the hue angle is outside the range, the pixel will be assigned a binary value of 0,
g. generates pixel fields from the pixels of the intermediate image,
wherein the classifier is configured such that it performs the classification of pixel fields consisting of pixels based on the intermediate image generated by the segmentation and data reduction device (66), in which process only those pixel fields are classified that contain at least one pixel with a binary value of 1.

2. Analysis and processing device according to claim 1, **characterized in that** the data from the sensor (62) is compared with the database (78) in real time, in particular involving verification and classification of the data detected by the sensor (62).

3. Analysis and processing device according to any one of claims 1 or 2, **characterized in that** the visual detection unit (62) is connected to the communication unit (60).

4. Analysis and processing device according to any one of the preceding claims, **characterized in that** means (82a, 82b) are provided for connecting, as needed, to a carrier (12) which moves the analysis and processing device (14).

5. Analysis and processing device according to any one of the preceding claims, **characterized by** a two-part design in which the sensor (62), the tool unit (52), the motor (50) for driving the tool (58), the tool unit (52) and/or the actuator (48), the actuator (48), the first computer (46), and the first communication unit (60) with an interface (70a) are provided in a first unit (14a), and the database (78), a second computer (76), and a second communication unit (74) with an interface (36b, 70b) are provided in the second unit (14b), which first unit (14a) and second unit (14b) can be connected to each other for data exchange via the interfaces (70a, 70b).

6. Analysis and processing device according to claim 5, **characterized in that** the first unit (14a) comprises a first housing (40) and the second unit (14b) comprises a second housing (42).

7. Analysis and processing device according to claim 6, **characterized in that** the first and second housings (40, 42) are detachably connected to one another via a plug-in connection (44, 80).

8. Analysis and processing device according to any one of claims 6 or 7, **characterized in that** the first and second housings (40, 42) have receptacles (14c) as means for connection to the carrier (12) as required, which receptacles are associated with corresponding holding means (82a, 82b) of the carrier (12), by means of which the device (14) can be gripped and moved by the carrier (12).

9. Analysis and processing device according to any one of claims 6 to 8, **characterized in that** the first and second housings (40, 42) have coupling means (26b, 28, 36b, 38) as means for connecting to the carrier (12) as required, which coupling means are assigned to respective coupling means (26a, 28, 36a, 38) of the carrier (12), which latter means can be used to connect the device (14) to the carrier (12) and to move it.

10. Analysis and processing apparatus according to any one of the preceding claims, **characterized in that** the tool unit (52) comprises at least one feed unit (54) and a rotation unit (56) that interacts with the motor (50).

11. Analysis and processing device according to claim 10, **characterized in that** the rotation unit (56) has, at one distal end thereof, at least the tool (58), in particular a milling cutter (58) or a cutting unit.

12. Analysis and processing device according to any of the preceding claims, **characterized by** a voltage terminal (26b) for external power supply.

13. Analysis and processing device according to claim 12 and any one of claims 4 to 11, **characterized in that** the voltage terminal (26b) is provided on the first unit (14a), and that this terminal supplies voltage to both the first unit (14a) and the second unit (14b).

14. Analysis and processing device according to any one of claims 4 to 13, **characterized by** an additional communication interface (36b) for a carrier (12).

15. Analysis and processing device according to claim 14, **characterized in that** the additional communication interface (36b) is located in the second unit (14b).

16. Method for real-time control of the cultivation of the soil and/or of the manipulation of flora and fauna by the analysis and processing device according to any one of the preceding claims, comprising the following steps:
a. continuous acquisition over time of data-defined voxels and/or pixels and/or images by the sensor;
b. transmission of the acquired data to the database (78);
c. storing the recording data in the database (78);
d. qualitative data comparison of the recording data with the data stored in the database (78), preferably by having the computer (46, 76) perform segmentation, data reduction, and/or verification of the recording data;
e. evaluation of the compared recording data against existing, defined data sets in the database (78) using a classifier (68) in conjunction with the computer (46, 76);
f. processing and converting the evaluation by the computer (46, 76) into control and/or instrumentation data for the motor (50), the actuator (48), the tool unit (52), and/or an associated carrier (12), wherein, during data comparison, the recording data is transmitted to the segmentation and signal reduction device (66) which generates an intermediate image,
wherein the segmentation and data reduction device (66) performs the following steps sequentially to generate the intermediate image:
a. each image captured by the camera (64) is generated in the form of a plurality of pixels in an RGB color model (red, green, and blue),
b. each pixel, based on the RGB color model (red, green, blue), is converted into an HSV (hue, saturation, value) color model,
c. each pixel, based on the HSV color model, is evaluated with respect to color saturation using a threshold value, wherein, if the color saturation value exceeds a threshold value, the pixel will be assigned a binary value of 1, and, if the color saturation value is below a threshold, the pixel will be assigned a binary value of 0,
d. in parallel with the step above, each pixel is evaluated based on the HSV color model with respect to its hue angle using a predetermined range, in which process, if the hue angle is within the predetermined range, the pixel will be assigned a binary value of 1, and if the hue angle is outside the range, the pixel will be assigned a binary value of 0,
e. from the binary information representing the hue and saturation of each pixel, an intermediate image is generated that contains significantly less data than the image produced by the camera (64), with the classification being performed by a classifier (68) that, based on an intermediate image or intermediate data generated by the segmentation and data reduction device (66), performs the classification of multiple pixel fields consisting of pixels; with only those pixel fields being classified that have at least one pixel that has been assigned a binary value of 1.

17. Method according to claim 16, **characterized in that**, once the control and/or instrumentation data are available, the motor (50), the actuator (48), the tool unit (52), and/or the carrier (12) are started to till the soil, and/or an associated carrier (12) is started to manipulate flora and fauna.

18. Method according to any one of claims 16 or 17, **characterized in that** the evaluation is performed in a computer (46, 76) cooperating with the classifier (68), in particular the second computer (76), and the processing and conversion of the evaluation into control and/or instrumentation data is performed in another computer (46, 76), in particular the first computer (46), for which purpose the evaluation is transmitted from the one computer (46, 76) to the other computer (46, 76).

19. Method according to any one of claims 16 to 18, **characterized in that** the storage, the qualitative data comparison of the recording data with data stored in the database (78), and/or the evaluation by the classifier (68) are supported by artificial intelligence.

## Revendications

1. Dispositif d'analyse et de traitement (14) mobile pour l'agriculture destiné au traitement du sol et/ou à la manipulation de la flore et de la faune, comprenant au moins un capteur (62), une unité d'outil (52) avec au moins un outil (58) entraîné par moteur, un actionneur (48) pour le déplacement au moins de l'outil (58) de l'unité d'outil (52), un moteur (50) pour l'entraînement de l'unité d'outil (52) et/ou de l'actionneur (48), une base de données (78), une première unité de communication (60) avec une interface (70a) et un premier calculateur (46) pour la commande du capteur (62), de l'unité d'outil (52) et de l'actionneur (48) sur la base de consignes de commande produites, dans lequel le premier calculateur (46) est configuré de sorte que les données saisies via le capteur (62) soient recoupées en continu avec les données déposées dans la base de données (78) afin de produire des signaux de commande correspondants pour l'actionneur (48), l'unité d'outil (52) et/ou le moteur (50), dans lequel
le capteur est une unité de détection (62) visuelle qui comprend :
une caméra (64) avec laquelle des images sont saisies,
un équipement de segmentation et de réduction de données (66) configuré de sorte que celui-ci
a. produise, dans un modèle de couleur RVB (rouge, vert et bleu), chaque image enregistrée par la caméra (64) à partir d'une pluralité de pixels,
b. transfère chaque pixel, sur la base du modèle de couleur RVB (rouge, vert, bleu), dans un modèle de couleur TSV (teinte, saturation, valeur),
c. produise une image intermédiaire à partir d'informations binaires des pixels individuels,
un classificateur (68) qui est configuré de sorte que celui-ci entreprenne la classification sur la base d'une image intermédiaire produite par l'équipement de segmentation et de réduction de données (66) ou de données intermédiaires,
**caractérisé en ce que**
l'équipement de segmentation et de réduction de données (66) est en outre configuré de sorte que
d. l'image intermédiaire est produite à partir des informations binaires comprenant l'angle de couleur et la saturation de couleur des pixels individuels, laquelle contient nettement moins de données que l'image produite par la caméra ;
e. évalue, à l'aide d'une valeur seuil, chaque pixel sur la base du modèle de couleur TSV en ce qui concerne la saturation de couleur (saturation), dans lequel, lorsque la valeur de la saturation de couleur dépasse par le haut une valeur seuil, le pixel est affecté à la valeur binaire « 1 », et lorsque la valeur de la saturation de couleur dépasse par le bas une valeur seuil, le pixel est affecté à la valeur binaire « 0 »,
f. évalue parallèlement, à l'aide d'une plage prédéterminée, chaque pixel sur la base du modèle de couleur TSV en ce qui concerne l'angle de couleur (teinte), dans lequel, lorsque l'angle de couleur se situe dans la plage prédéterminée, le pixel est affecté à la valeur binaire « 1 », et lorsque l'angle de couleur se situe à l'extérieur de la plage, le pixel est affecté à la valeur binaire « 0 »,
g. produise des champs de pixels des pixels de l'image intermédiaire,
dans lequel le classificateur est configuré de sorte que celui-ci, sur la base de l'image intermédiaire produite par l'équipement de segmentation et de réduction de données (66) ou de données intermédiaires, entreprenne la classification de champs de pixels composés de pixels, dans lequel seuls sont classifiés les champs de pixels qui ont au moins un pixel auquel est affectée la valeur binaire « 1 ».

2. Dispositif d'analyse et de traitement selon la revendication 1, **caractérisé en ce que** le recoupement de données des données établies par le capteur (62) s'effectue en temps réel avec la base de données (78), en particulier avec une vérification et une classification des données établies par le capteur (62).

3. Dispositif d'analyse et de traitement selon la revendication 1 ou 2, **caractérisé en ce que** l'unité de détection (62) visuelle est reliée avec l'unité de communication (60).

4. Dispositif d'analyse et de traitement selon l'une des revendications précédentes, **caractérisé en ce que** des moyens (82a, 82b) sont prévus pour une liaison en fonction des besoins avec un support (12) que le dispositif d'analyse et de traitement (14) déplace.

5. Dispositif d'analyse et de traitement selon l'une des revendications précédentes, **caractérisé par** une conception divisée en deux, dans lequel dans une première unité (14a) sont prévus le capteur (62), l'unité d'outil (52), le moteur (50) pour l'entraînement de l'outil (58), de l'unité d'outil (52) et/ou de l'actionneur (48), l'actionneur (48), le premier calculateur (46) et la première unité de communication (60) avec interface (70a), et dans la seconde unité (14b) sont prévus la base de données (78), un second calculateur (76) et une seconde unité de communication (74) avec interface (36b, 70b), dans lequel la première unité (14a) et la seconde unité (14b) peuvent être reliées ensemble via les interfaces (70a, 70b) pour un échange de données.

6. Dispositif d'analyse et de traitement selon la revendication 5, **caractérisé en ce que** la première unité (14a) comprend un premier logement (40) et la seconde unité (14b) comprend un second logement (42).

7. Dispositif d'analyse et de traitement selon la revendication 6, **caractérisé en ce que** le premier et le second logements (40, 42) sont reliés ensemble de façon amovible via une liaison par fiche (44, 80).

8. Dispositif d'analyse et de traitement selon la revendication 6 ou 7, **caractérisé en ce que** le premier et le second logements (40, 42) présentent des réceptions (14c) en tant que moyen pour la liaison en fonction des besoins avec le support (12), lesquelles sont attribuées à des moyens de retenue (82a, 82b) correspondants du support (12), via lesquelles le dispositif (14) peut être saisi et déplacé par le support (12).

9. Dispositif d'analyse et de traitement selon l'une des revendications 6 à 8, **caractérisé en ce que** le premier et le second logements (40, 42) présentent des moyens de couplage (26b, 28, 36b, 38) en tant que moyen pour la liaison en fonction des besoins avec le support (12), lesquels sont attribués à des moyens de couplage (26a, 28, 36a, 38) correspondants du support (12), via lesquels le dispositif (14) peut être relié et déplacé avec le support (12).

10. Dispositif d'analyse et de traitement selon l'une des revendications précédentes, **caractérisé en ce que** l'unité d'outil (52) présente au moins une unité d'avancement (54) et une unité de rotation (56), laquelle coopère avec le moteur (50).

11. Dispositif d'analyse et de traitement selon la revendication 10, **caractérisé en ce que** l'unité de rotation (56) présente à une extrémité distale au moins l'outil (58), en particulier une fraise (58) ou une unité de découpe.

12. Dispositif d'analyse et de traitement selon l'une des revendications précédentes, **caractérisé par** un raccordement à la tension (26b) pour une alimentation en tension extérieure.

13. Dispositif d'analyse et de traitement selon la revendication 12 et l'une des revendications 4 à 11, **caractérisé en ce que** le raccordement à la tension (26b) est prévu au niveau de la première unité (14a) et alimente en tension via celui-ci tant la première unité (14a) que la seconde unité (14b).

14. Dispositif d'analyse et de traitement selon l'une des revendications 4 à 13, **caractérisé par** une autre interface de communication (36b) pour un support (12).

15. Dispositif d'analyse et de traitement selon la revendication 14, **caractérisé en ce que** l'autre interface de communication (36b) est agencée dans la seconde unité (14b).

16. Procédé de régulation en temps réel du traitement du sol et/ou de la manipulation de la flore et de la faune par un dispositif d'analyse et de traitement selon l'une des revendications précédentes avec les étapes suivantes :
a. enregistrement en continu dans le temps, par le capteur, de voxels et/ou de pixels et/ou d'images définis par technique de données ;
b. transmission des données d'enregistrement à la base de données (78) ;
c. stockage des données d'enregistrement dans la base de données (78) ;
d. recoupement de données qualitatif des données d'enregistrement avec les données déposées dans la base de données (78), de préférence avec réalisation d'une segmentation, d'une réduction de données et/ou d'une vérification des données d'enregistrement par le calculateur (46, 76) ;
e. évaluation des données d'enregistrement recoupées avec des jeux de données définis existants dans la base de données (78) par un classificateur (68) en liaison avec le calculateur (46, 76) ;
traitement et conversion de l'évaluation par le calculateur (46, 76) en des données à caractère de technique de régulation et/ou de commande pour le moteur (50), l'actionneur (48), l'unité d'outil (52) et/ou un support (12) attribué, dans lequel, pendant le recoupement de données, les données d'enregistrement sont transférées à l'équipement de segmentation et de réduction de données (66) qui produit une image intermédiaire, dans lequel pour produire l'image intermédiaire l'équipement de segmentation et de réduction de données (66) réalise successivement les étapes suivantes :
a. chaque image enregistrée par la caméra (64) est produite dans un modèle de couleur RVB (rouge, vert et bleu) sous la forme d'une pluralité de pixels,
b. chaque pixel est transféré, sur la base du modèle de couleur RVB (rouge, vert, bleu), dans un modèle de couleur TSV (teinte, saturation, valeur),
c. chaque pixel est évalué sur la base du modèle de couleur TSV, à l'aide d'une valeur seuil, en ce qui concerne la saturation de couleur (saturation), dans lequel, lorsque la valeur de la saturation de couleur dépasse par le haut une valeur seuil, le pixel est affecté à la valeur binaire « 1 », et lorsque la valeur de la saturation de couleur dépasse par le bas une valeur seuil, le pixel est affecté à la valeur binaire « 0 »,
d. parallèlement à l'étape mentionnée précédemment, chaque pixel est évalué sur la base du modèle de couleur TSV, à l'aide d'une plage prédéterminée, en ce qui concerne l'angle de couleur (teinte), dans lequel, lorsque l'angle de couleur se situe dans la plage prédéterminée, le pixel est affecté à la valeur binaire « 1 », et lorsque l'angle de couleur se situe à l'extérieur de la plage, le pixel est affecté à la valeur binaire « 0 »,
e. à partir des informations binaires de l'angle de couleur et de la saturation de couleur des pixels individuels est produite une image intermédiaire, laquelle contient nettement moins de données que l'image produite par la caméra (64), dans lequel la classification est effectuée par un classificateur (68) qui, sur la base d'une image intermédiaire produite par l'équipement de segmentation et de réduction de données (66) ou de données intermédiaires, entreprend la classification de plusieurs champs de pixels composés de pixels ; seuls sont classifiés les champs de pixels qui ont au moins un pixel auquel est affectée la valeur binaire « 1 ».

17. Procédé selon la revendication 16, **caractérisé en ce qu'**après présentation des données à caractère de technique de régulation et/ou de commande est réalisé un démarrage du moteur (50), de l'actionneur (48), de l'unité d'outil (52) et/ou du support (12) pour le traitement du sol et/ou d'un support (12) attribué pour la manipulation de la flore et de la faune.

18. Procédé selon la revendication 16 ou 17, **caractérisé en ce que** l'évaluation est réalisée dans un calculateur (46, 76), en particulier dans le second calculateur (76), coopérant avec le classificateur (68), et le traitement et la conversion de l'évaluation en des données à caractère de technique de régulation et/ou de commande sont réalisés dans un autre calculateur (46, 76), en particulier dans le premier calculateur (46), ce pour quoi l'évaluation est transmise du un calculateur (46, 76) à l'autre calculateur (46, 76).

19. Procédé selon l'une des revendications 16 à 18, **caractérisé en ce que** le stockage du recoupement de données qualitatif des données d'enregistrement avec les données déposées dans la base de données (78) et/ou l'évaluation par le classificateur (68) sont assistés par une intelligence artificielle.
